(19) **Europäisches Patentamt**
**European Patent Office**
**Office européen des brevets**

(11) **EP 3 115 909 A1**

(12) **EUROPEAN PATENT APPLICATION**

(43) Date of publication:
**11.01.2017 Bulletin 2017/02**

(51) Int Cl.:
***G06F 17/30*** (2006.01)

(21) Application number: **15306125.4**

(22) Date of filing: **08.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
- **Thomson Licensing**
  **92130 Issy-les-Moulineaux (FR)**
- **INRIA - Institut National de Recherche en Informatique et en Automatique**
  **78150 Le Chesnay (FR)**

(72) Inventors:
- **LE SOUARNEC, Nicolas**
  **35576 Cesson-Sévigné (FR)**
- **ANDRE, Fabien**
  **35576 Cesson-Sévigné (FR)**
- **KERMARREC, Anne-Marie**
  **35042 Rennes Cedex (FR)**

(74) Representative: **Huchet, Anne**
**TECHNICOLOR**
**1-5, rue Jeanne d'Arc**
**92130 Issy-les-Moulineaux (FR)**

(54) **METHOD AND APPARATUS FOR MULTIMEDIA CONTENT INDEXING AND RETRIEVAL BASED ON PRODUCT QUANTIZATION**

(57) A technique for efficient multimedia content indexing, search and retrieval is proposed based on Product Quantization (PQ) codes, by using the processor more efficiently to make the scanning faster. The technique indexes a multimedia content database according to a tree structure based on index groups, each group represented by at least one bit per sub-quantizer, for less than all sub-quantizer. In addition, sub-quantizers centroids are grouped and each group, named minimum group, is represented by their minimum distance. The search is performed by storing in a fast access memory distance table segments for at least one index group and at least one minimum group at a time.

Figure 13A

**Description**

TECHNICAL FIELD

The present principles relate to multimedia content indexing, search and retrieval.

BACKGROUND

Recent interest in object recognition has yielded a wide range of approaches to describing the contents of an image. One important application for this technology is the visual search of large collections of images, such as those on the Internet, which contains billions of images, or on people's home computers. A common theme is the representation of the image as a collection of feature vectors and the use of efficient data structures to handle the large number of images. Methods for efficiently searching this incredibly rich resource are vital for a large number of applications.

Indexing, searching and retrieving image content consist of several steps, including:

  i. Extracting descriptors of the content that are generally high dimensional vectors (*e.g.*, 128 floats per Scale Invariant Feature Transform - SIFT image descriptor, 960 floats for GIST image descriptor);
  ii. Storing these descriptors for later access;
  iii. Performing a query by finding the descriptors that are the closest to a query descriptor.

This procedure can also be followed by a post-search verification step (geometric verification, re-ranking, etc.). These techniques were initially developed for image content but extend beyond image indexing to the more general problem of approximate nearest neighbor search in database of numerical vectors of high dimensionality representing multimedia content (*e.g.*, image, audio, video, text, user profile data, etc. or a combination). For example, time series analysis can imply matching sub-sequences to a motif (descriptors) database to find the closest known motif when presented a sub-sequence of time series. In this case, high dimensionality vectors are also encountered, since a measurement every 30 seconds over 1 hour leads to a vector of 120 floats. Applications include object recognition (face, fingerprint, eye or iris, document, text, etc.), computer graphics, personal photo collections and online image search tools, artificial intelligence and robotics, where a machine must search and recognize countless objects, etc.

A traditional approach consists in organizing the descriptors in a spatial structure (*e.g.*, KD-tree) that allows dividing the space into cells and to search a subset of the cells for the closest descriptors. However, since the vectors have a high dimension, the efficiency of such structure is reduced due to a problem known as "the curse of dimensionality", forcing it to explore a significant part of the space. Intuitively, if the query vector belongs to a cell c, its closest neighbor may also be in any neighboring cell of c. As the dimension increases, the number of neighboring cells increases exponentially. As a consequence, the ability to prune the search space is reduced, forcing it to explore the "whole" space. This is problematic since computing the distance to each other descriptor is costly, and the base may not fit the main memory (RAM) requiring costly I/O with disks or Solid State Drives (SSD).

A recent development regarding approximate nearest neighbor in high dimensional space are Product Quantization (PQ) codes, which aim at reducing computational cost and the size of the representation. PQ codes were introduced in the seminal paper "Product Quantization for Nearest Neighbor Search", by H. Jegóu, M. Douze and C. Schmid, published in the IEEE Transactions on Pattern Analysis and Machine Intelligence, 2011, vol. 33 (1), pp.117-128. Even though PQ codes were initially developed and evaluated in the context of images, they can be generally applied to the problem of nearest neighbor search and, as such, are not specific to image processing. More generally, PQ codes can be useful in any application involving approximate nearest-neighbor search of multimedia content such as pattern mining in time series analysis, clustering, classification, etc.

In PQ codes, the whole space may be partitioned around a set of reference descriptors chosen (*e.g.*, using K-means) to be coarse quantizers. A descriptor is then allocated to the cluster of its closest coarse quantizer. In addition, the residual *(i.e.,* the difference between the descriptor and the reference descriptor) is quantified using a fine quantizer of reference residuals (e.g., obtained using K-means). For a vector of dimension $D$ (*e.g., D* = 128 or 960), each group of $D^* = D/m$ is quantified to one of the $k^* = 2^8$ or $2^{16}$ symbols that correspond to reference residuals (*e.g.*, obtained using a K-means). The residual descriptor is thus stored as $D^* \times b$ bits, where $b = log_2 k^* = 8$ or 16 bits instead of $D$ floats. Common values for $m$ are 8 or 4, leading to a representation of each descriptor taking only $B = m \times b = 64$ bits of memory, for a total number of descriptors $k = 2^{64}$. Hence, the whole database can fit in the main memory of a server. (a server costing $12,000.00 nowadays can contain $2 \times 10$ cores and a 384 GB RAM)

To perform a query, the query descriptor is compared to all reference descriptors (coarse quantizer) and the closest partition(s) is (are) scanned to find the nearest neighbors of the query descriptor. For each partition, the distance between the query descriptor and the descriptors corresponding to reference residuals are computed. The estimated distance between the query descriptor and the quantified descriptor is then the sum of the distances between the query descriptor and the descriptors corresponding to the reference residuals.

While PQ codes are more efficient than previous techniques thanks to the more compact representation and a more efficient way of computing distances, they require scanning large portions of the database and the actual performance of the scanning (2.5 GB/s per core, on Intel Haswell processors) is far below the theoretical attainable performance of the processor (*i.e.,* the memory bandwidth which is around 15 GB/s per core).

It is therefore of interest to propose more efficient strategies for indexing, search and retrieval of multimedia content. The present principles provide such a strategy.

SUMMARY

The present principles provide a technique for efficient multimedia content indexing, search and retrieval.

According to one embodiment of the present principles, a method of indexing multimedia content for the purpose of retrieval, the method including: accessing a multimedia content database comprising a plurality of database multimedia content items represented according to a $m \times b$ Product Quantization (PQ) code; generating a tree structure of index groups, each index group represented by at least one bit per index-grouped sub-quantizer, for less than all sub-quantizers; and storing in memory each database multimedia content item in its respective index group.

According to one embodiment of the present principles, the method further includes: interleaving at least two database multimedia content items at a time prior to storing, wherein their respective components per sub-quantizer are stored adjacently as a block of components, at least two at a time for each sub-quantizer.

According to one embodiment of the present principles, a method of multimedia content retrieval including: accessing a multimedia content database comprising a plurality of database multimedia content items represented according to a $m \times b$ Product Quantization (PQ) code and indexed according to any of the methods of indexing described above; accessing a distance table for a query multimedia content item represented according to the $m \times b$ PQ code, wherein the distance table is stored in at least one first memory; storing in at least one second memory a distance table segment including at least one index group, wherein the at least one second memory permits a faster access than the at least one first memory; accessing a minimum distance table for the query multimedia content item stored in at least one third memory, wherein the minimum distance table includes a plurality of minimum tables, one per minimum grouped sub-quantizer, the minimum table containing one distance for each minimum group of a sub-quantizer, each minimum group per sub-quantizer grouping centroids of the sub-quantizer according to a plurality of bits; storing in at least one fourth memory at least one minimum distance table segment including at least one minimum table, wherein the at least one fourth memory permits a faster access than the at least one third memory; performing a search between the query multimedia content item and the plurality of database multimedia content items contained in the at least one index group by accessing the at least one second memory and the at least one fourth memory; and retrieving at least one database multimedia content item, wherein the at least one database multimedia content item is the closest at least one database multimedia content item from the query multimedia content item.

According to one embodiment of the present principles, the method further includes: repeating the steps of storing and performing for at least one segment of the distance table and at least one segment of the minimum distance table.

According to one embodiment of the present principles, the method further includes: generating a minimum distance table based on the distance table by grouping sub-quantizer centroids according to a plurality of bits per sub-quantizer and representing each minimum group by one distance value, wherein the distances for all the minimum groups of a sub-quantizer constitute a minimum table.

According to one embodiment of the present principles, the sub-quantizer centroids are clustered before indexed in order to correlate their binary representation with their respective distances.

According to one embodiment of the present principles, the minimum grouped sub-quantizers are at least sub-quantizers not index-grouped and the one distance is a minimum distance among the distances within a minimum group.

According to one embodiment of the present principles, the database multimedia content items are not interleaved, the method further including: interleaving at least two database multimedia content items at a time prior to storing, wherein their respective components per sub-quantizer are stored adjacently as a block of components, at least two at a time for each sub-quantizer.

According to one embodiment of the present principles, the method further includes: storing at least one block of components of the database in at least one fifth memory having a faster access than the database memory; and the search is performed by further: accessing the at least one fifth memory.

According to one embodiment of the present principles, the at least one second, fourth and fifth memories are registers.

According to one embodiment of the present principles, the step of performing a search further includes: calculating a query-database distance between a query multimedia content item and a database multimedia content item based on the distance table and minimum distance table segments; discarding the database multimedia content item if the query-database distance or if partial values of the distance during the calculating step are higher than a threshold; and updating the threshold if the query-database distance is smaller than the threshold.

According to one embodiment of the present principles, the step of discarding may further include: discarding at least one index group if no database multimedia content item in the at least one index group may have a distance to the query multimedia content item smaller than the threshold.

According to one embodiment of the present principles, the method further includes: If the database multimedia content item is not discarded, calculating an exact distance between the database multimedia content item and the query multimedia content item based only on the distance table, prior to the step of updating.

According to one embodiment of the present principles, the multimedia content is quantized according to a coarse quantizer and m residual quantizers and is stored in accordance with an inverted file architecture, wherein the retrieved at least one database multimedia content item has a coarse quantizer level within a window w from the coarse quantizer level of the query multimedia content item.

According to one embodiment of the present principles, an apparatus for indexing multimedia content for the purpose of retrieval, the apparatus including a processor, for receiving at least one input/output; and at least one memory in signal communication with the processor, the processor being configured to: access a multimedia content database comprising a plurality of database multimedia content items represented according to a $m \times b$ Product Quantization (PQ) code; generate in the at least one memory a tree structure of index groups, each group represented by at least one bit per sub-quantizer, for less than all sub-quantizers; and store each database multimedia content item in its respective index group of the at least one memory.

According to one embodiment of the present principles, the processor is further configured to: interleave at least two database multimedia content items at a time prior to storing, wherein their respective components per sub-quantizer are stored adjacently as a block of components, at least two at a time for each sub-quantizer.

According to one embodiment of the present principles, an apparatus for multimedia content retrieval, the apparatus including a processor, for receiving at least one input/output; at least one first memory, at least one second memory, at least one third memory and at least one fourth memory in signal communication with the processor, the processor being configured to: access a multimedia content database comprising a plurality of database multimedia content items represented according to a $m \times b$ Product Quantization (PQ) code and the database multimedia content items are indexed according to any of the apparatuses for indexing above; access a distance table for a query multimedia content item according to the $m \times b$ PQ code, wherein the distance table is stored in the at least one first memory; store in the at least one second memory a distance table segment including at least one index group, wherein the at least one second memory permits faster access from the processor than the at least one first memory; access a minimum distance table for the query multimedia content item stored in the at least one third memory, wherein the minimum distance table includes a plurality of minimum tables, one per minimum grouped sub-quantizer, the minimum table containing one distance for each minimum group of a sub-quantizer, each minimum group per sub-quantizer grouping centroids of the sub-quantizer according to a plurality of bits; store in at least one fourth memory at least one minimum distance table segment including at least one minimum table, wherein the at least one fourth memory permits a faster access than the at least one third memory; perform a search between the query multimedia content item and the plurality of database multimedia content items contained in the at least one index group by accessing the at least one first memory; and retrieve at least one database multimedia content item, wherein the at least one database multimedia content item is the closest at least one database multimedia content item from the query multimedia content item.

According to one embodiment of the present principles, the processor is further configured to: store and perform a search for at least one segment of the distance table and at least one segment of the minimum distance table.

According to one embodiment of the present principles, the processor is further configured to: generate a minimum distance table based on the distance table by grouping sub-quantizer centroids according to a plurality of bits per sub-quantizer and representing each minimum group by one distance value, wherein the distances for all the minimum groups of a sub-quantizer constitute a minimum table.

According to one embodiment of the present principles, the sub-quantizer centroids are clustered before indexed in order to correlate their binary representation with their respective distances.

According to one embodiment of the present principles, the minimum grouped sub-quantizers are at least sub-quantizers not index-grouped and the one distance is a minimum distance among the distances within a minimum group.

According to one embodiment of the present principles, the database multimedia content items are not interleaved, the processor being further configured to: interleave at least two database multimedia content items at a time prior to storing, wherein their respective components per sub-quantizer are stored adjacently as a block of components, at least two at a time for each sub-quantizer.

According to one embodiment of the present principles, the processor is further configured to: store at least one block of components of the database in at least one fifth memory, the fifth memory having a faster access than the database memory; and the processor is configured to perform a search by being further configured to: accesses the fifth memory.

According to one embodiment of the present principles, the at least one second, fourth and fifth memories are registers.

According to one embodiment of the present principles, the processor performs a search by being further configured to: calculate a query-database distance between a query multimedia content item and a database multimedia content item based on the distance table and minimum distance table segments; discard the database multimedia content item if the query-database distance or if partial values of the distance during the calculation are higher than a threshold; and update the threshold if the query-database distance is smaller than the threshold.

According to one embodiment of the present principles, the processor discards by being further configured to: discard at least one index group if no database multimedia content item in the at least one index group may have a distance to the query multimedia content item smaller than the threshold.

According to one embodiment of the present principles, the processor is further configured to: If the database multimedia content item is not discarded, calculate an exact distance between the database multimedia content item and the query multimedia content item based only on the distance table, prior to updating the threshold.

According to one embodiment of the present principles, the multimedia content is quantized according to a coarse quantizer and $m$ residual quantizers and is stored in accordance with an inverted file architecture, wherein the retrieved at least one database multimedia content item has a coarse quantizer level within a window w from the coarse quantizer level of the query multimedia content item and the window contains at least one coarse quantizer level.

Additional features and advantages of the present principles will be made apparent from the following detailed description of illustrative embodiments which proceeds with reference to the accompanying figures.

BRIEF DESCRIPTION OF THE DRAWINGS

The present principles may be better understood in accordance with the following exemplary figures briefly described below:

Figure 1 illustrates a prior art inverted file architecture for a product quantizer;
Figure 2 illustrates an exemplary database and distance calculation for a 4 × 16 PQ code according to the present principles;
Figure 3 illustrates an exemplary database and distance calculation for a 8 × 8 PQ code according to the present principles;
Figure 4 illustrates the cache hierarchy for the Intel Haswell processor;
Figure 5 illustrates an exemplary database for a 4 × 16 PQ code according to the present principles;
Figure 6 illustrates an exemplary database re-arrangement for the 4 × 16 PQ code example of Figure 5 according to the present principles;
Figure 7 illustrates an exemplary database for a 8 × 8 PQ code according to the present principles;
Figure 8 illustrates an exemplary database partial re-arrangement for the 8 × 8 PQ code example of Figure 7 according to the present principles;
Figure 9 (A, B, C and D) illustrates an exemplary graphical interpretation of sub-quantizer hyperplanes and their respective centroid binary representations: A) Arbitrary labelling of centroids; B) Distances from a query vector for arbitrary labelling; D) Relabeling of centroids; D) Distances after relabeling.
Figure 10 illustrates an exemplary database and distance calculation for a 8 × 8 PQ code according to the present principles;
Figure 11 illustrates an exemplary database and distance calculation for a 8 × 8 PQ code according to the present principles;
Figure 12 (A and B) illustrates an exemplary flowchart of a method of indexing multimedia content according to the present principles;
Figure 13 (A, B, C and D) illustrates an exemplary flowchart of a method of multimedia content retrieval according to the present principles; and
Figure 14 illustrates a block diagram of a computing environment within which the present principles may be implemented and executed.

DETAILED DISCUSSION OF THE EMBODIMENTS

The present principles provide a technique for efficient multimedia content indexing, search and retrieval based on PQ codes, by using the processor more efficiently to make scanning faster. This translates in reduced operating costs for an image indexing service (*i.e.,* less servers and lower power consumption), as well as an enhanced quality of service (*i.e.,* a reduced delay for providing users with the answer to its query).

Formally, a quantizer is a *function q* mapping a *D*-dimensional vector $x \in \mathcal{R}^D$ to a vector $q(x) \in C = \{c_i; i \in I\}$, where the index set *I* is from now on assumed to be finite: $I = 0, ..., k - 1$. The reproduction values $c_i$ are called centroids. The set of reproduction values C is the codebook of size *k*. The set $v_i$ of vectors mapped to a given index *i* is referred to as a (Voronoi) cell, and defined as:

$$\mathcal{V}_i \triangleq \{x \in \mathcal{R}^D : q(x) = c_i\} \qquad (1)$$

The *k* cells of a quantizer form a partition of $\mathcal{R}^D$. By definition, all the vectors lying in the same cell $v_i$ are reconstructed by the same centroid $c_i$. In order for the quantizer to be optimal, it has to satisfy the Lloyd optimality conditions, the first of which requires that a vector x must be quantized to its nearest codebook centroid, in terms of the Euclidean distance:

$$q(x) = \arg\min_{c_i \in C} d(x, c_i) \qquad (2)$$

where d(.,.) is the Euclidean distance between two vectors. The quality of a quantizer is usually measured by the mean squared error between the input vector *x* and its reproduction value *q(x)*.

Considering a 128-dimensional vector, *e.g.*, the SIFT descriptor, a quantizer producing 64-bit codes, *i.e.,* only 0.5 bit per component, contains $k = 2^{64}$ centroids. Therefore, it is impractical to use standard algorithms like Lloyd's algorithm or even HKM (Hierarchical K-Means), as the number of samples required and the complexity of learning the quantizer are several times *k*. It is even impractical to store the $D \times k$ floating point values representing the *k* centroids.

Product quantization is an efficient solution to address these issues, since it allows one to choose the number of components to be quantized jointly. The input vector *x* is split into *m* distinct subvectors $u_j$, $1 \le j \le$ m of dimension $D^* = D/m$, where *D* is a multiple of m. The subvectors are quantized separately using m distinct quantizers. A given vector *x* is therefore mapped as follows:

$$x_1, ..., x_{D^*}, \quad ... \quad , x_{D-D^*+1}, ..., x_D \rightarrow q_1\big(u_i(x)\big), ..., q_m\big(u_m(x)\big) \qquad (3)$$

$$\underbrace{\qquad\qquad}_{u_i(x)} \qquad\qquad u_m(x)$$

where $q_j$ is a low-complexity quantizer associated with the *j*th subvector. The sub-quantizer $q_j$ is associated with the index set $I_j$, the codebook $C_j$ and the corresponding reproduction values $c_{j,i}$.

A reproduction value of the product quantizer is identified by an element of the product index set $I = I_1 \times ... \times I_m$. The codebook is therefore defined as the Cartesian product $C = C_1 \times ... \times C_m$ and a centroid of this set is the concatenation of centroids of the m sub-quantizers. Without loss of generality, it is assumed that all sub-quantizers have the same finite number *k** of reproduction values. In that case, the total number of centroids is given by:

$$k = \big(k^*\big)^m \qquad (4)$$

In the extreme case where m = *D,* the components of a vector *x* are all quantized separately. Then the product quantizer turns out to be a scalar quantizer, where the quantization function associated with each component may be different.

The strength of a product quantizer is to produce a large set of centroids from several small sets of centroids: those associated with the sub-quantizers. When learning (or training) the sub-quantizers using Lloyd's algorithm (which corresponds to K-means clustering), a limited number of vectors is used, but the codebook is, to some extent, still adapted to the data distribution to represent. The complexity of learning the quantizer is *m* times the complexity of performing K-means clustering with *k** centroids of dimension $D^*$.

Storing the codebook C explicitly is not efficient. Instead, the $m \times k^*$ centroids of all the sub-quantizers are stored, *i.e.,* $m \times D^* \times k^* = k^* \times D$ floating point values. Quantizing an element requires $k^* \times D$ floating point operations, which corresponds to the assignment complexity. One can observe that for a fixed number of bits, it is better to use a small number of sub-quantizers with many centroids than having many sub-quantizers with few bits. At the extreme when $m = 1$, the product quantizer becomes a regular K-means codebook.

High values of $k^*$, though, increase the computational cost of the quantizer. They also increase the memory usage of storing the centroids ($k^* \times D$ floating point values), which further reduces the efficiency if the centroid look-up table does no longer fit in cache memory. In the case where m =1, one cannot afford using more than 16 bits to keep this cost tractable. Using $k^* = 256$ and $m = 8$ is often a reasonable choice.

Nearest neighbor search depends on the distances between a query vector $x$ and a database vector $y$, or equivalently the squared distances. The vectors are compared based on their quantization indices by computing an asymmetric approximate Euclidean distance between the two vectors. According to the Asymmetric Distance Computation (ADC), the database vector $y$ is represented by $q(y)$, but the query $x$ is not encoded. The distance $d(x, y)$ is approximated by the distance $\tilde{d}(x, y) = d(x, q(y))$, which is computed using the decomposition:

$$\tilde{d}(x,y) = d\big(x, q(y)\big) = \sqrt{\sum_{j=1}^{m} d\left(u_j(x), q_j\left(u_j(y)\right)\right)^2} \quad (5)$$

where the squared distances $d(u_j(x),c_{j,i})^2 : j=1,...,m, i=1,...,k^*$ are computed prior to the search. In practice, one may not compute the square roots: the square root function is monotonically increasing and the squared distances produce the same vector ranking.

The ADC computation requires the following complexity for the different steps involved in searching the $\ell$ nearest neighbors of a vector $x$ in a dataset $\Upsilon$ of N= $|\Upsilon|$ vectors:

    i. Encoding x: 0;
    ii. Computing $d(u_j(x), c_{j,i})$: $k^* \times D$;
    iii. For $y \in \Upsilon$, computing $\tilde{d}(x, y)$: Nxm;
    iv. Finding the $\ell$ smallest distances: N+$\ell$ log $\ell$ log log $N$.

A Symmetric Distance Computation (SDC) may also be employed with similar overall complexity (though the complexity of steps i and ii are exchanged), where both vectors $x$ and $y$ are represented by their respective centroids $q(x)$ and $q(y)$ and where the distance components are read from look-up tables associated with each sub-quantizer. Each look-up table contains all the squared distances between pairs of centroids of the sub-quantizer, or $(k^*)^2$. However, ADC has a better performance than SDC.

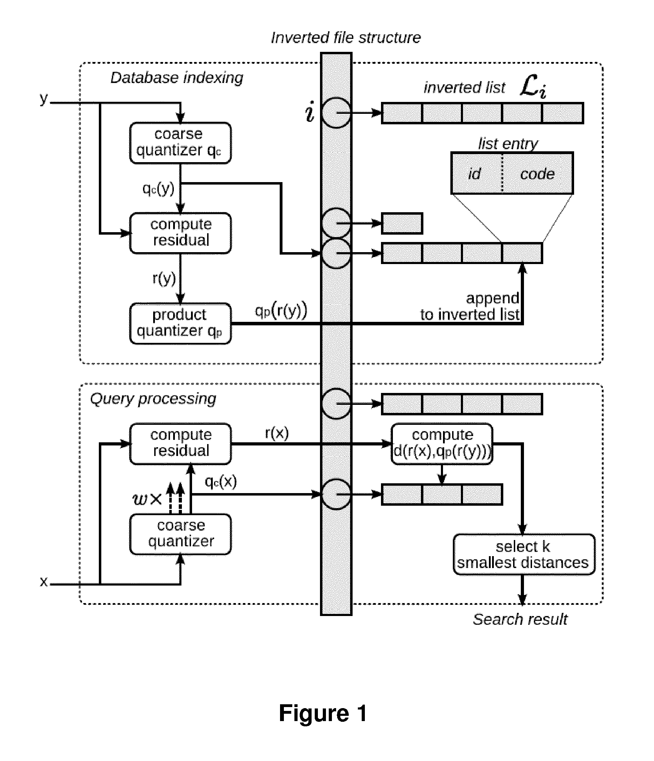

The architecture of the product quantizer can be implemented in a straightforward manner or satisfy an inverted file system, which quantizes the descriptors and stores image indices in the corresponding lists, as described in the seminal paper and illustrated in Figure 1. In the following, and without loss of generality, the product quantizer will be explained in terms of this architecture.

The inverted file system allows rapid access to a small fraction of image indices and was shown successful for very large scale search. Instead of storing an image index only, a small code is added for each descriptor. Here, the difference between the vector and its corresponding coarse centroid is encoded with a product quantizer. This approach significantly accelerates the search at the cost of a few additional bits/bytes per descriptor. Furthermore, it slightly improves the search accuracy, as encoding the residual is more precise than encoding the vector itself.

The codebook for the coarse quantizer $q_c$ is learned using K-means. For SIFT descriptors, the number $k'$ of centroids is typically from one thousand to one million, which is relatively small compared with $k$. In order to take into account the information provided by the coarse quantizer, *i.e.,* the centroid $q_c(y)$ associated with a descriptor vector $y$, the product quantizer $q_p$ is used to encode the residual vector:

$$r(y) = y - q_c(y) \quad (6)$$

corresponding to the offset in the Voronoi cell. The energy of the residual vector is small compared to that of the vector itself. The vector is approximated by:

$$\ddot{y} \triangleq q_c(y) + q_p\big(y - q_c(y)\big) \quad (7)$$

It is represented by the tuple $(q_c(y), q_p(r(y)))$. By analogy with the binary representation of a value, the coarse quantizer provides the most significant bits, while the product quantizer code corresponds to the least significant bits.

The estimator of $d(x, y)$, between query vector $x$ and the database vector $y$, is computed as the distance $\ddot{d}(x, y)$ between $d(x, y)$, and $\ddot{y}$:

$$\ddot{d}(x, y) = d(x, \ddot{y}) = d\left(x - q_c(y), q_p\left(y - q_c(y)\right)\right) \qquad (8)$$

Denoting by $q_{pj}$ the $j$th sub-quantizer, the following decomposition is used to compute this estimator efficiently:

$$\ddot{d}(x, y) = \sqrt{\sum_{j=1}^m d\left(u_j(x - q_c(y)), q_{pj}\left(u_j(y - q_c(y))\right)\right)^2} \qquad (9)$$

Similar to the ADC strategy, for each sub-quantizer $q_{pj}$ the distances between the partial residual vector $u_j(x - q_c(y))$ and all the centroids $c_{j,i}$ of $q_{pj}$ are preliminarily computed and stored in a lookup table.

The product quantizer is learned (or trained) on a set of residual vectors collected from a learning set. Although the vectors are quantized to different indices by the coarse quantizer, the resulting residual vectors are used to learn a unique product quantizer. It is assumed that the same product quantizer is accurate when the distribution of the residual is marginalized over all the Voronoi cells. This may give inferior results to the approach consisting of learning and using a distinct product quantizer per Voronoi cell. However, the latter strategy would be computationally expensive and would require storing $k'$ product quantizer codebooks, *i.e., $k' \times D \times k^*$* floating points values, which would be memory-intractable for common values of $k'$.

The coarse quantizer is used to implement an inverted file structure as an array of lists $L_1, ..., L_{k'}$, as shown in Figure 1. If $\Upsilon$ is the vector dataset to index, the list $L_i$ associated with the centroid $c_i'$ of $q_c$ stores the set $\{y \in \Upsilon: q_c(y) = c_i'\}$. In inverted list $L_i$, an entry corresponding to $y$ contains a vector identifier of length 8-32 bits and the encoded residual $q_p(r(y))$ of length $m \log_2 k^*$ bits. The identifier field is the overhead due to the inverted file structure. Depending on the nature of the vectors to be stored, the identifier is not necessarily unique. For instance, to describe images by local descriptors, image identifiers can replace vector identifiers, *i.e.,* all vectors of the same image have the same identifier. Therefore, a 20-bit field is sufficient to identify an image from a dataset of one million.

When searching the nearest neighbors of a vector $x$, the inverted file provides a subset of $\Upsilon$ for which distances are estimated: only the inverted list $L_i$ corresponding to $q_c(x)$ is scanned. However, $q_c$ and its nearest neighbor are often not quantized to the same centroid, but to nearby ones. To address this problem, a multiple assignment strategy is used: The query $x$ is assigned to w indexes instead of only one, which correspond to the w nearest neighbors of $x$ in the codebook of $qc$. All the corresponding inverted lists are scanned. The multiple assignment strategy is not applied to database vectors, as this would increase the memory usage.

Figure 1 gives an overview of how a database is indexed and searched. Indexing a vector $y$ proceeds as follows:

I1. Quantize $y$ to $q_c(y)$;
I2. Compute the residual $r(y) = y - q_c(y)$ (eq. 6);
I3. Quantize $r(y)$ to $q_p(r(y))$, which, for the product quantizer, amounts to assigning $u_j(y)$ to $q_j(u_j(y))$, for j = 1, ... , $m$.
I4. Add a new entry to the inverted list corresponding to $q_c(y)$. It contains the vector (or image) identifier and the binary code (the product quantizer's indices).

Searching the nearest neighbor(s) of a query $x$ consists of:

S1. Quantize $x$ to its w nearest neighbors in the codebook $q_c$; For the sake of presentation, the two next steps simply denote by $r(x)$ the residuals associated with these w assignments. The two steps are applied to all w assignments.
S2. Compute the squared distance for each sub-quantizer $j$ and each of its centroids $c_{j,i}$. $d(u_j(x - q_c(x)), c_{j,i})^2 = d(u_j(r(x)), c_{j,i})^2$. As a result, a distance table is generated for each $i$ and $j$ containing the value of the squared distance;
S3. Compute the squared distance between $r(x)$ and all the indexed vectors of the inverted list. Using the subvector-to-centroid distances computed in the previous step, this consists in summing up m looked-up values in Eq. 9;
S4. Select the $\ell$ nearest neighbors of $x$ based on the estimated distances. This is implemented efficiently by maintaining a Maxheap structure of fixed capacity, that stores the $\ell$ smallest values seen so far. After each distance calculation, the point identifier is added to the structure only if its distance is below the largest distance in the Maxheap.

Only step 3 above depends on the database size. Compared with ADC, the additional step of quantizing $x$ to $q_c(x)$ consists in computing $k'$ distances between $D$-dimensional vectors. Assuming that the inverted lists are balanced, about $N \times$ w/$k'$ entries have to be parsed. Therefore, the search is significantly faster than ADC.

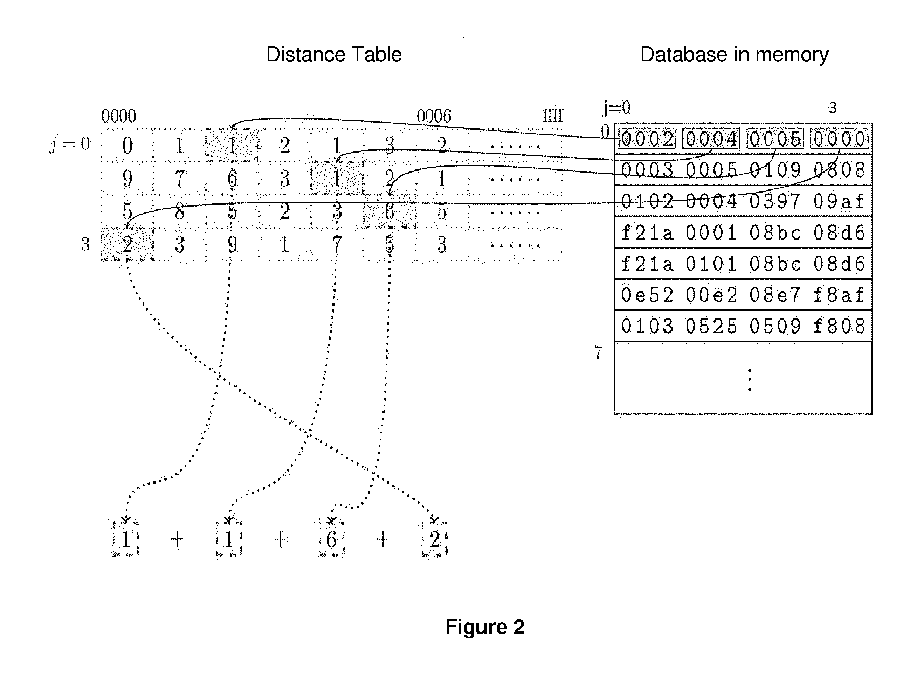

Figure 2 illustrates an exemplary database and distance calculation for a $4 \times 16$ PQ code according to the present principles. In Figure 2, the distance table generated in step S2 above is expressed as a matrix, where each row corresponds to a sub-quantizer $j = 0, ...,3$. The columns of the distance table correspond to the values of $i = 0, ..., 2^{16} - 1$ centroids per sub-quantizer (in hexadecimal numbers, h). The database is stored in memory as vectors of 64 bits (16 hexadecimal values) where each row represents a vector $n$ and each column $j$ represents a centroid of sub-quantizer $j$. Each vector in the database represents multimedia content. Multiple vectors may represent the same multimedia content, as they may represent different characteristic points, parameters or features of the same content, e.g., different poses, or different resolutions of an image. Each component of a database vector addresses the respective row and column of the distance table, with the value of the component (16 bits in hexadecimal representation) corresponding to the column of the distance table. For example, for the first vector ($n = 0$) of the database, its first component ($j = 0$) addresses the element ($j = 0$, $i = 0002$h) of the distance table, which has a distance of 1. This distance value will be added to the other three distance values from the distance table corresponding to the other three components of the first database vector. The result of the addition (1 + 1 + 6 + 2) is the distance (item S3 above) between the database vector and the query vector associated with the distance table in the figure.

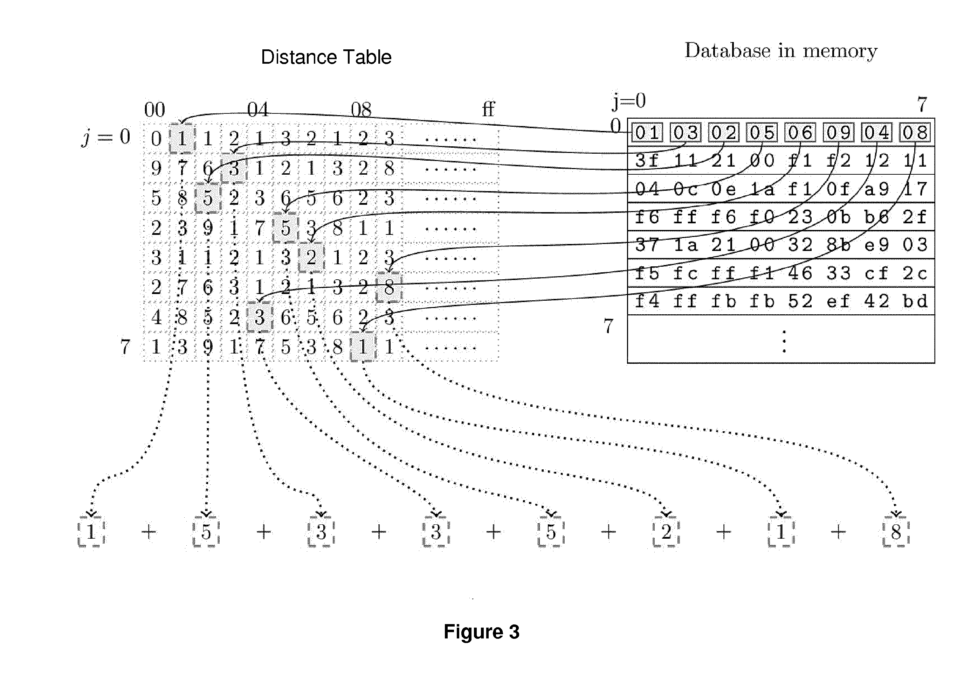

Figure 3 illustrates an exemplary database and distance calculation for an $8 \times 8$ PQ code according to the present principles. Therefore, each database vector has 8 components and the distance table has 8 rows. But the principles are the same as explained for Figure 2.

Although PQ codes are efficient with respect to the prior art, a simple implementation of these codes still yields a performance far below the theoretical attainable performance of the processor, leaving room for improvement. Without loss of generality, the present principles will be discussed by utilizing the example of PQ codes $m \times 8$ (e.g., $8 \times 8$), product quantizers with the inverted file architecture and searches performed on Intel Haswell processors. However, a similar analysis applies to other PQ $m \times b$ codes, as well as to a straightforward implementation of the codes and to general processors and equivalent hardware implementations.

A pseudo-code of the scan or search is shown in Table 1 below, for 1-NN (Nearest Neighbor) search and for a PQ m $\times$ b code. This code sample can be easily extended to maintain a list of the $\ell$-NN keeping the $\ell$ minimum values. This code implements steps S3 and S4 of the NN search previously described, provided that the table in in step S2 has been calculated. In Table 1, $d[j, v]$ is the (floating point or integer-represented) distance from the query descriptor for sub-quantizer $j$ (from 0 to $m - 1$) and quantified value $v$, $Q[n,j]$ is the $n$-th database descriptor quantification (*e.g.,* 8 or 16 bits) for the $j$-th group of coordinates (*i.e.,* one of the centroids $c_{j,i}$) and $N$ is the number of database vectors/descriptors to compare against. For the inverted file architecture and $w = 1$, $N$ represents the number of database descriptors associated with the particular coarse quantizer level of interest. For each descriptor $n$ from 0 to $N - 1$, and for each of the residual clusters $j$ (from 0 to $m - 1$), the distance (dist) is calculated by adding the distances between the reference descriptor and the query vector for each cluster $j$. Then the minimum distance (min_value) and corresponding database vector index $n$ is found among the values of $n$ from 0 to $N - 1$.

For a straightforward implementation of the product quantizer, the scan algorithm in Table 1 still applies with small differences. In this case, $N$ is the size of the entire database, there is no coarse quantizer and the quantization represented by the $j$ clusters applies to the query vector, instead of the residual of the query vector. Hence, the calculated distances are associated with the query and database vectors and not their residuals.

Table 1

```
1. Calculate the distance for each reference descriptor n in the
   database:
   min_value = +∞;
   min_index = -1;
   for n = 0 to N - 1
       dist[n] = .0; // floating point value
       for j = 0 to m - 1
           dist[n] += d[j,Q[n,j]];
       end for
   end for
2. Find the minimum distance:
```

(continued)

```
if dist[n] < min_value
    min_value = dist[n];
    min_index = n;
end if
end for
3. Output: min_value and min_index
```

For Intel Haswell processors, the scanning performance for the purpose of computing the distances according to the scan algorithm in Table 1 and a PQ code m x 8 is around 2.5 GB/s per core, while the processor bandwidth is around 15 GB/s per core. A detailed analysis of the computational performance of the reference implementation of PQ codes shows that the current bottleneck is the lookup into the distance table $d[.,.]$, which involves memory access or lookup.

Most of the execution time of the scan algorithm in Table 1 is spent in this distance for loop for two reasons: (i) it is the portion of code which is executed the most number of times, and (ii) it includes two memory accesses, which are costly operations. One memory access of this loop (to the database) fetches $Q[n,j]$ from memory and stores it to a register. Another memory access (to the distance table) retrieves $d[.,.]$ from memory, using the register where $Q[n,j]$ is stored as index. Hardware prefetching techniques (or pipelining) may allow the cost of the database memory access to be minimized, making the distance table memory access the most costly.

While simple integer operations (*e.g.*, incrementing loop counters) are executed in 1 CPU clock cycle and can be easily pipelined, memory accesses are more costly on modern CPU architectures. The execution time of a memory access varies with the level of cache accessed.

Table 2 summarizes the access latencies and sizes of different levels of cache for Intel architectures. These figures are valid for all Intel architectures released since 2008, *i.e.,* from the Nehalem architecture to the Haswell architecture. On these architectures, each CPU core has its own L1 and L2 caches. The L3 cache is shared between all cores but its size depends on the number of CPU cores and the CPU range. Main memory has much higher latency than any cache level at 100-300 cycles.

Table 2

| Cache | L1 | L2 | L3 |
|---|---|---|---|
| Latency (in cycles) | 4-5 | 11-13 | 25-40 |
| Size | 32 KB | 256 KB | 2-3 MB |

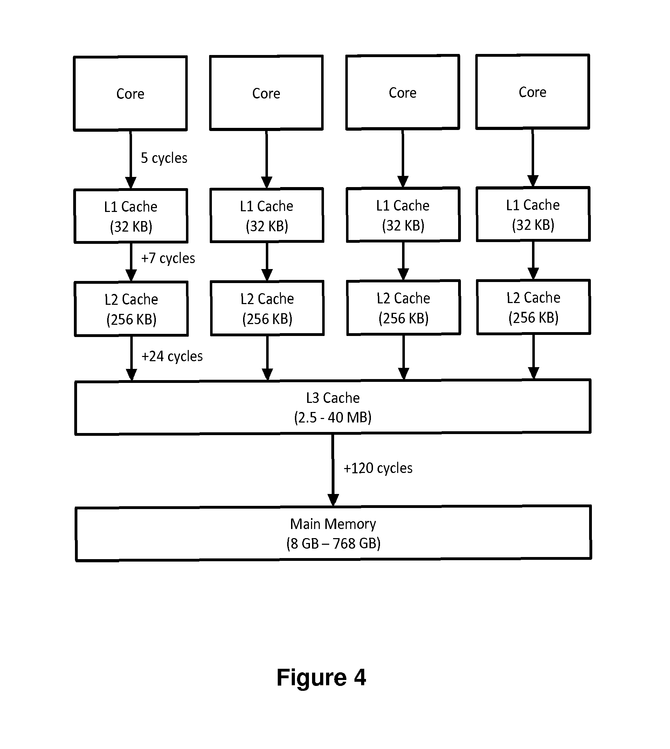

Figure 4 shows the cache hierarchy of the Haswell processor, composed of the three levels, and the number of cycles necessary to access the respective levels, as well as the main memory. Table 2 and Figure 4 illustrate how many more cycles are necessary for deeper layers of the hierarchy and how desirable it is to avoid these deeper layers. For example, for the Haswell processor, only 5 cycles are needed to access the L1 cache as opposed to 5+7+24=36 cycles for the L3 cache. However, even if the distance table is small enough to fit into the L1 cache of the processor, which is the case for $b = 8$ bit symbols, the latency of repeatedly looking up into the table represents a major limitation in speed performance. The problem to be solved is how to perform a faster scan, and therefore, a faster multimedia content search and retrieval based on a PQ code m $\times$ 8, and in general, a m $\times$ b PQ code.

The size of the distance table for a PQ m $\times$ b code is m $\times$ $k^*$ $\times$ F, where F is the size of a floating point number, so 4 bytes (32 bits) on Intel architectures. Table 3 summarizes the size of the distance table and the cache level it can be stored in for different PQ configurations.

The value of m not only influences the locality of the distance table memory access, but also the number of memory accesses. Table 3 also shows the number of caches accesses for one call to the distance table: 2 $\times$ m L1 accesses and 2 x m L1 or L3 accesses, for different PQ configurations. It also displays an estimate of the number of cycles spent on memory accesses, calculated using the latencies in Table 2.

Table 3

| PQ Code | 16X4 | 8X8 | 4X16 |
|---|---|---|---|
| Size | 1KB | 8KB | 1MB |
| Cache | L1 | L1 | L3 |

(continued)

| PQ Code | 16X4 | 8X8 | 4X16 |
|---|---|---|---|
| # accesses | 16L1 + 16L1 | 8L1 + 8L1 | 4L1 + 4L3 |
| # cycles | 128-160 | 64-80 | 116-180 |

Table 3 shows that PQ 8 × 8 minimizes the number of cycles spent on memory accesses and therefore the execution time of nearest neighbor search. This explains why PQ 8 × 8 gives the lowest experimental search time, as reported in the literature so far. For this reason, we focus on PQ 8 × 8, but the analysis can be easily extended to general PQ $m \times b$ codes.

The present principles propose techniques to improve the speed performance of the search and retrieval of multimedia content by transforming the lookup distance table into reduced or small tables, sized to fit into registers (e.g., SIMD - Single Instruction, Multiple data). This transformation allows (i) in-register shuffle (e.g., Byte Shuffle SIMD instruction in a Haswell processor) in place of memory accesses and (ii) an efficient register (SIMD) based implementation. This permits the same accuracy as the traditional PQ scan algorithm, while having 4 to 5 times lower response time (*e.g.,* for 25 million vectors, search time is reduced from 74ms to 15ms). Although described in terms of SIMD registers and instructions in a Haswell processor, a skilled artisan will appreciate that the present principles easily translate to a general registers and processors, and to a hardware implementation of the simple operations involved, *e.g.,* a shift register based hardware implementation replicating the SIMD instruction.

In an exemplary embodiment of the present principles, in order to enable the use of registers, the distance table for the 8 × 8 code containing 256 floats per sub-quantizer (sized to fit the L1 cache) must be reduced to small tables of 16 bytes per sub-quantizer (sized to fit SIMD registers).

According to the present principles, the following techniques are proposed:

C1. Interleave database vectors;
C2. Group database vectors (re-arrangement/indexing);
C3. Compute (minimum distance) tables of distance lower bounds;
C4. Quantize floating numbers to integer or bytes.

Besides the faster memory access resulting from register storage and implementation, the reduced/small distance table also decreases the number of accesses, thereby pruning the search space. When a candidate is found, it then evaluates the distance according to the traditional PQ scan algorithm. As distances computed using reduced distance tables are, by construction, always lower than the true distance, the result is guaranteed to be identical to the traditional algorithm.

An SIMD instruction applies a single operation on multiple data elements. For instance, on Intel architectures, the paddw instruction adds two vectors of 8 short integers (8 × 16 bits) element-wise, in only one instruction. Each CPU core has a unit able to execute SIMD instructions. SIMD therefore adds another level of parallelism to multicore processing. To be able to process multiple data elements, SIMD instructions operate on wider registers than traditional instructions. The SSE family of SIMD instruction sets operates on 128 bits SIMD registers, while the more recently introduced AVX family of instructions operate on 256 bits SIMD registers.

In an exemplary embodiment of the present principles, the byte shuffle instruction, named pshufb on Intel architectures, is utilized. The pshufb instruction applies on two 128 bits register holding 16 elements of 8 bits each. The elements of one register are used as indices while the elements of the other register constitute a sub-quantizer row of a distance table (e.g., which must contain 16 symbols as well, therefore, 8 bits per symbol/distance value. The pshufb looks up elements in the table register corresponding to the indices in the index register and stores results in a result register.

According to one embodiment of the present principles, regarding item C1 above, prior to any scan, elements/vectors of the database shall be interleaved appropriately depending on the type of codes used. Namely, if memory accesses are performed on a set of registers for a total of 128 bits, the database vectors shall be interleaved so that the memory contains 128 bits of symbols corresponding to the first component of database vectors, 128 bits of symbols corresponding to the second component of database vectors, ... 128 bits of symbols corresponding to the m-th component of database vectors, and then, the next 128 bits of symbols corresponding to the first component of database vectors again, ... the next 128 bits of symbols corresponding to the m-th component of database vectors, and so on. This may differ from a regular layout where the memory contains all m components/symbols of the first database vector/element, all m components/symbols of the second database vector/element, and so on... This operation is also known as transposition from an Array of Structures (AoS) to a Structure of Arrays (SoA).

For a PQ $m \times b$ code, let a database be stored in AoS format/layout as $p_{nj}$ components (of $b$ bits), where $n = 0, ..., N - 1$ is the database vector number and $j = 0, ..., m - 1$ is the sub-quantizer number as follows:

$$\left[p_{00}, p_{01}, ..., p_{0,m-1}\right], \left[p_{10}p_{11}, ..., p_{1,m-1}\right], ..., \left[p_{N-1,0}, p_{N-1,1}, ..., p_{N-1,m-1}\right]$$

$$(10)$$

where each set of brackets holds the content of a database vector.

An index register of $B$ bits will hold $N_{SoA}$ symbols of $b$ bits (e.g., $B = 128$, $N_{SoA} = 16$, $b = 8$). Hence, the interleaved or SoA format/layout of the database memory prior to storing in the index register shall be:

$$\left[p_{00}, p_{10}, ... p_{N_{SoA}-1,0}\right], \left[p_{01}p_{11}, ... p_{N_{SoA}-1,1}\right], ..., \left[p_{0,m-1}p_{1,m-1}, ..., p_{N_{SoA}-1,m-1}\right],$$

$$\left[p_{N_{SoA},0}, p_{N_{SoA}+1,0}, ... p_{2N_{SoA}-1,0}\right], \left[p_{N_{SoA},1}p_{N_{SoA}+1,1}, ... p_{2N_{SoA}-1,1}\right], ...,$$

$$\left[p_{N_{SoA},m-1}p_{N_{SoA}+1,m-1}, ... p_{2N_{SoA}-1,m-1}\right], \left[p_{2N_{SoA},0}, ...\right], ...$$

$$\cdots \left[p_{N-N_{SoA},m-1}, p_{N-N_{SoA}+1,m-1}, ..., p_{N-1,m-1}\right] \qquad (11)$$

where each set of brackets holds the content of an index register.

A skilled artisan will appreciate that there are other interleaving formats which can be implemented which perform as fast but require a higher degree of parallelism, i.e., a larger number of registers. In the extreme case, the database memory would contain the 1st components of all database vectors, followed by their 2nd components, 3rd components, and so on, as follows:

$$p_{00}, p_{10}, ..., p_{N-1,0}, p_{01}, p_{11}, ..., p_{N-1,1}, ..., p_{0,m-1}, p_{1,m-1}, ..., p_{N-1,m-1} =$$

$$\left[p_{00}, p_{10}, ... p_{N_{SoA}-1,0}\right], \left[p_{N_{SoA},0}, p_{N_{SoA}+1,0}, ... p_{2N_{SoA}-1,0}\right], ...,$$

$$\left[p_{N-N_{SoA},0}, p_{N-N_{SoA}+1,0}, ..., p_{N-1,0}\right], \left[p_{01}p_{11}, ... p_{N_{SoA}-1,1}\right],$$

$$\left[p_{N_{SoA},1}p_{N_{SoA}+1,1}, ... p_{2N_{SoA}-1,1}\right], ..., \left[p_{N-N_{SoA},1}, p_{N-N_{SoA}+1,1}, ..., p_{N-1,1}\right], ...$$

$$\cdots \left[p_{N-N_{SoA},m-1}, p_{N-N_{SoA}+1,m-1}, ..., p_{N-1,m-1}\right] \qquad (12)$$

where each set of brackets holds the content of an index register.

According to one embodiment of the present principles, regarding item C2 above, an improvement in speed performance is proposed which consists in rearranging/indexing the dataset/database in order to enhance memory locality with respect to accesses to the distance table. Re-arrangement/indexing is performed by grouping database vectors according to a number $b_{group}$ of bits for at least one sub-quantizer, wherein $b_{group}$ may differ per sub-quantizer and may be 0 for at least one sub-quantizer. The bits may be one or more MSB's (Most Significant Bits) of each sub-quantizer representation or a different combination of bits. Hence, accesses to the distance table exhibit spatial and temporal locality even if the table cannot fit entirely in the memory. The grouping associated with this indexing/re-arrangement of the database is hereby named index grouping and index groups are the corresponding index groups for the index-grouped sub-quantizers.

In co-pending application also titled "Method and Apparatus for Multimedia Content Indexing and Retrieval Based on Product Quantization" and filed by the same inventors as this application and on the same date, the focus is on grouping all sub-quantizers. Basically, only segments or portions of the distance table are loaded into the L1 cache at a time during the search phase of the algorithm, depending on the particular index group of database vectors being evaluated. Elements of the database are grouped together so that a lookup at a given time uses only a segment of the distance table (including sub-segments for each sub-quantizer), and subsequent lookups are also in close spatial (memory) locality, thus allowing most temporally close lookups to be in the segment already loaded in the L1. This decreases the need for frequent loads into the L1 cache, speeding up the overall system. Since the separate rows of a distance table representing separate sub-quantizers are independent, segments of each row/sub-quantizer of the distance table (also called sub-segments of the distance table) can be independently loaded into L1, creating great flexibility and enhancing the speed performance of the search and retrieval. Which sub-segment(s) of each sub-quantizer to load is (are) identified by the $b_{group}$ bits used to group the database vectors.

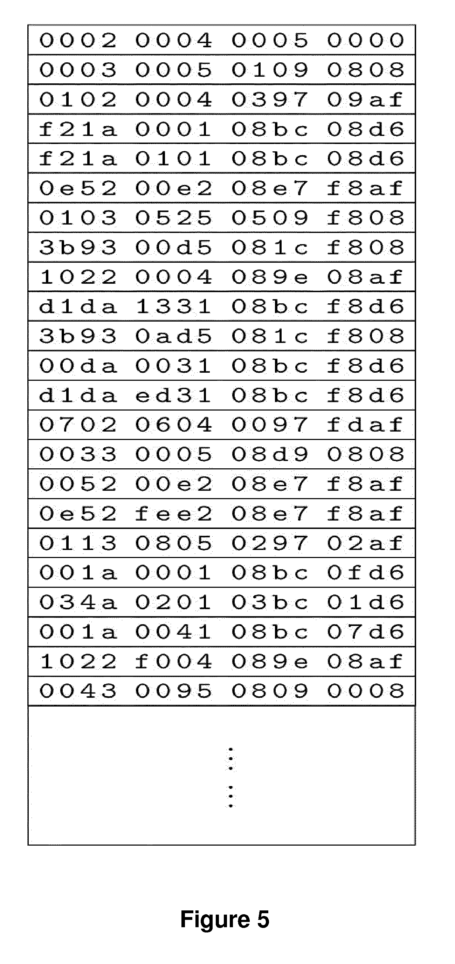

Figure 5 illustrates an exemplary database for a 4 × 16 PQ code. The figure shows the database in memory as a continuous memory zone which contains vectors of 4 components. In a regular implementation of PQ codes, the database of vectors contains vectors in a random order (the order in which images are stored/processed/indexed). As a consequence, when executing the computation of distance, the lookups into the table of distances exhibit a poor locality (e.g., the access to the first row $j = 0$ in the distance table can be $(i = 0002h, 0003h, 0102h, f21ah, 0002h....)$ rather than having a good locality of access, where subsequent temporal accesses are located as much as possible in the same memory segment of the table: $i = 0002h, 0002h, 0003h, 0004h, ...,0102h, 0103h, 0103h, 0104h, ...)$ and then (i = $\cdots, f21ah, f21ah, f21bh, f21ch, ...$).

The algorithm for performing the re-arrangement/indexing of the database satisfies the following steps:

R1. Initialize a tree structure to index empty groups per at least one sub-quantizer, according to a number $b_{group}$ of bits of sub-quantizer centroid representations, , wherein $b_{group}$ may differ per sub-quantizer and may be 0 for at least one sub-quantizer, the group ids per sub-quantizer being indexed in an increasing order of the binary representation of the corresponding $b_{group}$ bits.
R2. Store each indexed vector into a corresponding index group;
R3. Store the database continuously into memory by doing an in-order Depth-First Search (DFS) tree traversal.

Tree traversal is a form of graph traversal and refers to the process of visiting (examining and/or updating) each node in a tree data structure, exactly once, in a systematic way. Such traversals are classified by the order in which the nodes are visited. For a binary tree, they are defined as display operations recursively at each node, starting with the root node, An in-order (symmetric) depth first tree traversal, one starts at the root (selecting some arbitrary node as the root in the case of a graph) and explores as far as possible along each branch before backtracking.

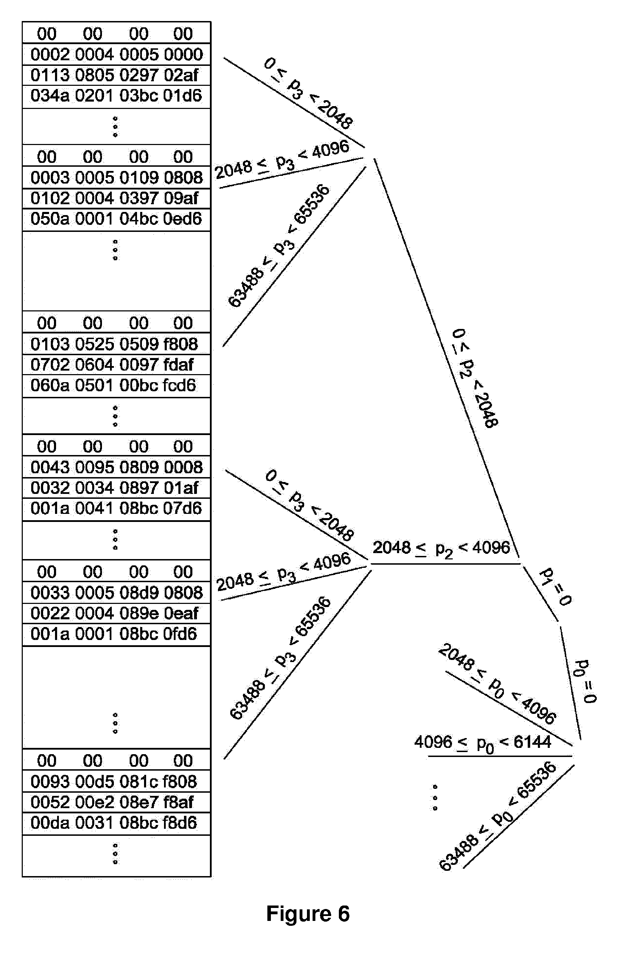

Figure 6 illustrates an exemplary database re-arrangement for the 4 × 16 PQ code of Figure 5 according to the present principles. In the figure, each value $p_j, j = 1, ...,3$ represents the quantized components for a database vector. The figure shows how the database of Figure 5 would be re-arranged according to each index group, including all sub-quantizers. The gray values are hexadecimal values for index groups of $b_{group} = 5$ MSB's per sub-quantizer. Hence, the first index group is (00 00 00 00h), the second one is (00 00 00 08h), the third one is (00 00 00 10h), and so on. Observe that the 3 Lowest Significant Bits (LSB) per sub-quantizer of this index group representation (of 2 hex numbers per sub-quantizer) are not a part of the index group (since the group only contains the 5 MSB's per sub-quantizer) and can assume any value for vectors within an index group. Hence, in the first index group (00 00 00 00h), the re-ordering algorithm places all vectors of the database which satisfy these values for the 5 MSB's of each of their 4 sub-quantized components.

Therefore, the quantified vectors are re-organized so as to group them to preserve the locality of accesses to the distance table during the scan/search, that is, the vectors within each index group are within close proximity in the distance table. An index group, or a plurality of index groups from the distance table may then be loaded into L1 at a time, and all the vectors within the index groups may be searched without a need for another load. Conversely, with the original random order of Figure 5, different portions of the distance table need to be loaded into L1 from one database vector searched to another, since there is no established memory proximity in the distance table among the components of subsequent database vectors.

In an exemplary embodiment for the 4 × 16 PQ code, considering that one wants to allocate 1/4th of the L1 cache to each row of the distance table, where the cache size is $M_{L1} = 32KB$, groups of 2048 symbols, *i.e.,* components of a vector or distance table elements per sub-quantizer row (2048 × 4 bytes per float = 8 KB) are formed for a total of 32KB for the 4 sub-quantizer rows of the table, which is the size of the L1 cache. Since each row has $2^{16} = 65536$ columns or elements, this means that the database vectors are dispatched into 65536/2048 = 32 groups (or 5 bits) using their first symbol/component. Then, the vectors of each group are dispatched into 65536/2048 = 32 sub-groups using their second symbol. Then, again sub-sub-groups are formed using their third symbols, and sub-sub-sub-groups using their fourth symbols.

Thanks to this re-organization, lookups can be served by the L1 cache most of the time, thus allowing a performance improvement in speed. The locality of accesses to the distance table is ensured, and the cost of fetching parts of the distance table to the L1 cost is amortized on the scan/search of the complete index group, for a large database. It is important to notice that the size of the group decreases exponentially with the level of grouping. For the first symbol, the size of each sub-group is on average M/32 where M is the total number of symbols. After the second symbol, the size of each sub-group is on average M/(32^2). After the third and fourth symbol the size is on average M/(32^3) and M/(32^4).

Since the last sub-group is likely to be very small, it is unlikely that the cost of fetching the part of the distance table considered for the fourth symbol can be amortized. Hence, lookups for the fourth symbols are likely to impact heavily the performance.

In order to further improve the speed of memory access, hence, search and retrieval of multimedia content, the present principles propose a partial re-arrangement/indexing of the database which together with item C3, permits transforming cache resident distance tables into reduced/small tables, sized to fit registers, e.g., SIMD (Single Instruction, Multiple data) registers. This re-arrangement/indexing is performed for less than all sub-quantizers. In this case, there is no need for a depth-first tree, and it can be a general tree, since loading the segment of the table in a register is not as costly as loading a complete segment in the L1 cache of the previous case described above.

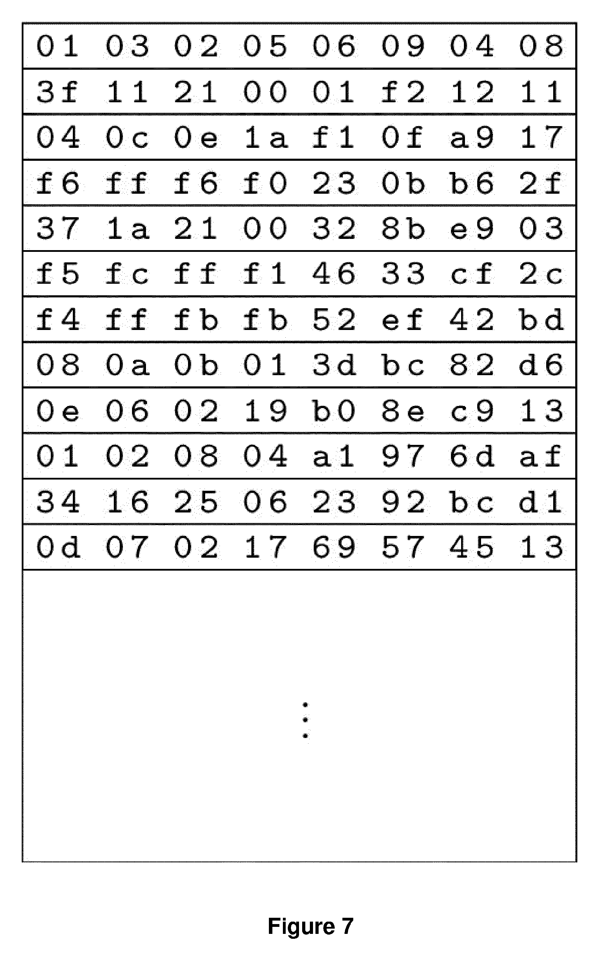

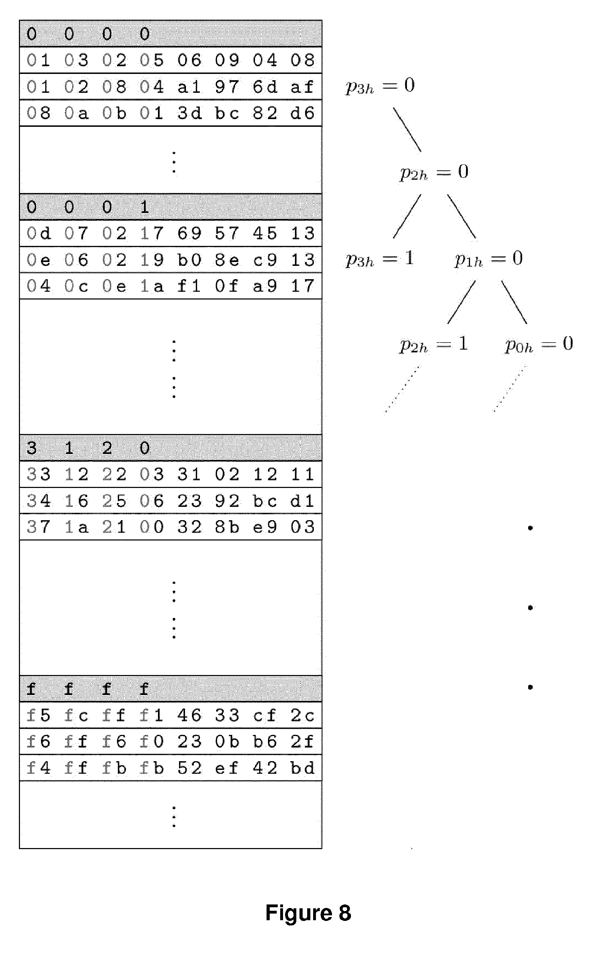

Figures 7 and 8 illustrate an exemplary database for an $8 \times 8$ PQ code and corresponding partial re-arrangement for index groups according to the present principles. The partial re-arrangement of the database only includes the 4 first sub-quantizers and $b_{group}$ = 4 MSB's for each sub-quantizer. Other than the restriction on the number of sub-quantizers, the partial re-arrangement of the database is explained in the same way as previously discussed for Figures 5 and 6.

As previously stated, the key idea behind the database re-organization/indexing is to group vectors such that all vectors belonging to an index group utilize the same portion of a distance table. In this case, the vectors are being group according to 4 out of the 8 bits per sub-quantizer component of the database vector, resulting in 16 groups of 16 elements per index-grouped sub-quantizer, for a total of $2^b = 2^8 = 256$ elements/centroids per index-grouped sub-quantizer. All vectors having a first component between 00h and 0fh will trigger lookups in the first portion of the first row ($j = 0$, or the first sub-quantizer) of the distance table when computing the PQ distance. These vectors form the first group. All vectors having a first component between 10h and 1 fh will trigger lookups in the second portion of the first row of the distance table. These vectors form the second group. Hence, 16 groups are defined in this manner. The $i$-th group contains vectors such that $16i \leq p_i \leq 16(i + 1)$ and only requires the $i$-th portion of the first row of the distance table.

Starting with the first sub-quantizer component of each database vector, the corresponding portion of the first row of the distance table is loaded as a small table into a (SIMD) register before scanning a group. The operation then proceeds to the second, third and fourth sub-quantizer components of each database vector, which are grouped in the same manner as the first component. In the end, each index group is identified by four integers, $(i_0, i_1, i_2, i_3)$ belonging to the range [0,16) and contains vectors such that $16i_j \leq p_{ij} \leq 16(i_j + 1)$ for $0 \leq i_j < 16$, $0 \leq j \leq 3$.

Consequently, scanning an index group only requires a portion of 16 elements of the 1st, 2nd, 3rd and 4th rows of the distance table. Index-grouping is not applied to all 8 components so as not to create too small groups. Indeed, the average size $S$ of an index group is given by $S = N/16^c$, where $N$ is the number of vectors in the database and $c$ the number of sub-quantizer components used for grouping (4 in this case). For performance reasons, the average size $S$ of a group should exceed 50 vectors. To find nearest neighbors, tests were performed scanning 5-25 millions of vectors. For $N$ = 5 million and $c$ = 4, $S$ = 76, but for $N$ = 5 million and $c$ = 5, $S$ = 4.8 which is too small. This why it is better to apply grouping on the 4 first components only, in this case.

Index-grouping vectors as described also allows a decrease in the amount of RAM consumed by the database by approximatively 25%. All vectors of the index group $(i_1, i_2, i_3, i_3)$ are such that the difference between the largest value the smallest value is $2^{b_{group}}$ - 1 = 15, since the group is formed from the $b_{group}$ = 4 MSB's of each component. Therefore, by not storing these $b_{group}$ bits for each component, a total of 16 bits can be saved altogether, or 25% of the database bit consumption.

According to one embodiment of the present principles, regarding item C3 above, an improvement in speed performance is proposed which consists in building small/reduced distance tables. In order to generate reduced tables, at least one sub-quantizer segment/portion of the distance table is grouped according to a number $b_{small}$ of its bit representation, wherein $b_{small}$ may differ per sub-quantizer and may be 0 for at least one sub-quantizer. These bits may be MSB's, or any other combination of bits. Hence, for a PQ m $\times$ b code, $2^{b-b_{small}}$, groups are created per sub-quantizer. This grouping will be hereby named minimum grouping and minimum groups are the corresponding groups, as opposed to index grouping and index groups, associated with the indexing/re-arrangement of the database (item C2 above). Observe that both forms of grouping are applied to sub-quantizers. However, index grouping is used to group database vectors and is also reflected in the distance table addressing, that is, the indexing/addressing of the elements of the distance table. Minimum grouping is only used in the distance table construction and does not affect the database. Each row of a distance table, representing one sub-quantizer is going to be divided into a plurality of groups, One can perform minimum grouping for all $m$ sub-quantizers. However, in general, the sub-quantizers of interest to group according to $b_{small}$ are at least the ones not grouped according to $b_{group}$, that is, the ones not grouped in the indexing/re-arrangement of the database.

After minimum grouping, the minimum value of each minimum group per sub-quantizer is identified and assigned to represent the minimum group. This is equivalent to lower bounding by parts the distances of the distance table. These lower bounded grouped portions of the distance table per sub-quantizer are hereby called minimum tables. Each minimum table contains all the minimum groups of a sub-quantizer and all the minimum tables together will constitute the minimum distance table. It is associated with the sub-quantizers which are minimum-grouped. In an exemplary embodiment of the present principles, for the $8 \times 8$ PQ code and $b_{small}$ = 4 MSB's per sub-quantizer, there will be $2^{8-4}$ = 16 minimum groups per sub-quantizer row of the distance table, each group consisting of 16 elements/distances. For each minimum group its minimum distance is found among the elements of the group and the 16 elements are represented by the minimum distance.

The main drawback of this technique is that it tends to produce small/reduced tables containing very low values. Consequently, lower bound distances computed with these tables tend to be reasonably different from the exact PQ distance. However, if the lower bound distance between the query vector and a database vector is smaller than the distance to the current nearest neighbor, this database vector is considered to be a candidate. In order to ensure that information is not lost, a number of candidates are kept and, for all candidates, the exact PQ distance is later calculated, which slows down the scan/search. Consequently, computing too many small lower bound distances leads to selecting too many candidates and performing too many slow PQ distance computations.

In order to overcome, or to at least minimize the issue of having too many candidates, it is of interest that each minimum group contains similar distance values within its elements. This is not necessarily the case in product quantization, wherein each sub-quantizer is a multi-dimensional quantizer and centroid bit representations per sub-quantizer may be arbitrarily chosen, or chosen according to a rule that does not necessarily correlate Euclidean distances with binary representation. As a result, distances within a minimum group may vary substantially, despite the group elements having close binary representation values. For instance, the 9th value in the 4th row of the distance table is the distance between the 4th component of a query vector and the 9th centroid of the 4th sub-quantizer. But this centroid could have been given any other label, such as 3. One can even swap the 3rd value and the 9th value in the 4th row of the distance table, provided that one also replaces 9's by 3's (and conversely) in the 4th component of all database vectors.

According to the present principles, in order to generate minimum tables for which the minimum distance is more representative of the distances within the respective minimum groups, the centroid bit representation per sub-quantizer is re-organized or relabeled centroids such that there is a correlation between Euclidean and binary distances of their binary representations. Unfortunately, relabeling centroids is a costly operation and requires modifying the whole database, so this approach is not tractable. Rather, the present principles find a labeling of centroids that naturally leads to well-organized tables, *i.e.,* tables where values in the same portion are close, for any query vector. This is accomplished by running a clustering algorithm (*e.g.,* using K-means or similar) that clusters centroids according to their Euclidean distances, forcing binary assignments to correlate to Euclidean distances. In the exemplary embodiment above, the 16 minimum groups per sub-quantizer will contain 16 close centroids in terms of Euclidean distance and binary representation.

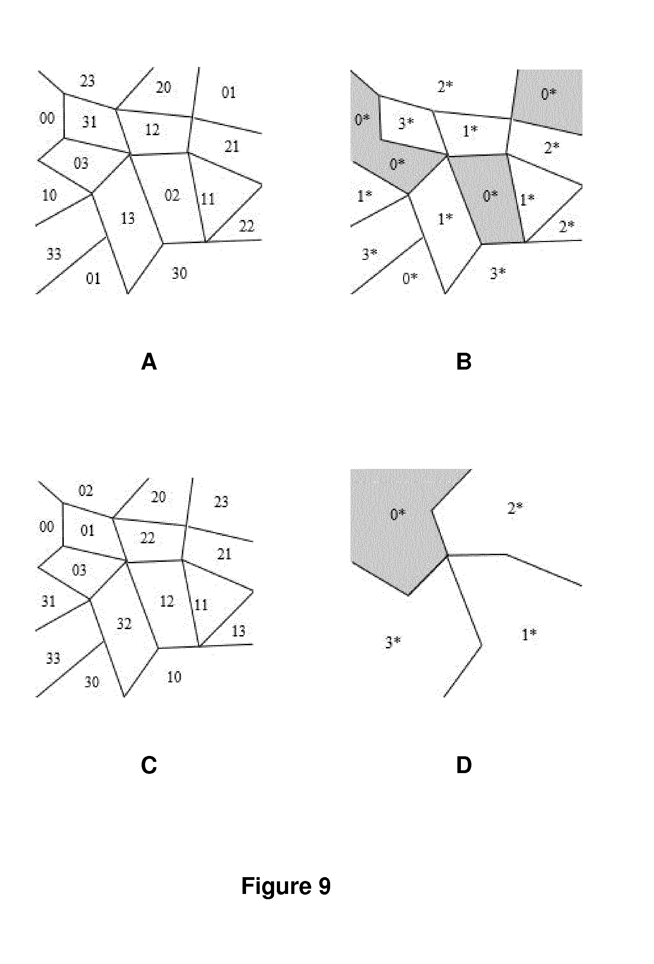

Figure 9 (A, B, C and D) illustrates an exemplary graphical interpretation of sub-quantizer hyperplanes and their respective centroid binary representations. In Figure 9A, the centroids are arbitrarily labeled. Figure 9B illustrates the corresponding distances for a particular query vector distance table, showing how little correlation exists between the distances and the centroid binary representation. Figure 9C shows a proper relabeling of centroids after clustering and re-numbering them based on Euclidean distances. Figure 9D illustrates the corresponding distances after relabeling of the centroids, showing how the centroids are now grouped together according to their distances. Hence, the 4 groups of centroids 00 to 03, 10 to 13, 20 to 23 and 30 to 33 are associated with 4 different groups of distances: 0, 1, 2 and 3, reflecting the improved correlation.

According to one embodiment of the present principles, regarding item C4 above, an improvement in speed performance is proposed which consists in quantizing floating point numbers into bytes or short integers. This reduces storage and speeds up computation, and permits the minimum tables to be contained in small registers.

This scalar quantization of floats is unrelated to the product quantization process. As distances are always positive floats, they are ideally quantized to unsigned integers (*e.g.,* 8 bits), which can hold values between 0 and 255. In the case of SIMD instructions, due to processor limitations, they may be quantized to signed 8 bit integers, only utilizing their positive range, *i.e.,* 0 to127. Scalar quantization quantizes floats between a minimum (min) and a maximum (max) value into $q$ bins. For uniform quantization, the size of each bin is (max - min)/ $q$ and the bin number is used as a representation value for the quantized float. All values below min are represented by min. Conversely, all values above max are represented by max. For example, for $q$ = 128, all values will be between 0 and 127.

According to the present principles, the minimum value (min) is chosen to be the minimum distance across a distance table for a query vector. This guarantees that no value is smaller than the min parameter.

For the maximum value (max parameter), a naive approach would be to sum the maximum values for each sub-quantizer in a distance table, reflecting the maximum distance which can be computed. However, this may not produce a tight upper bound for the max parameter, which may result in large quantization error.

According to one embodiment of the present principles, a small percentage of vectors of the database (e.g., 1-5%) are initially searched/scanned to find a partial nearest neighbor. This nearest neighbor distance to the query vector is then chosen as the max parameter. The reasoning is simple: one does not need to be able to represent distances higher that this distance, as all nearest neighbor candidates found afterwards will need to have a distance to the query vector smaller than the current nearest neighbor. Notice that max only affects one component (sub-quantizer). In addition, saturation arithmetic is used for when values overflow the register sizes.

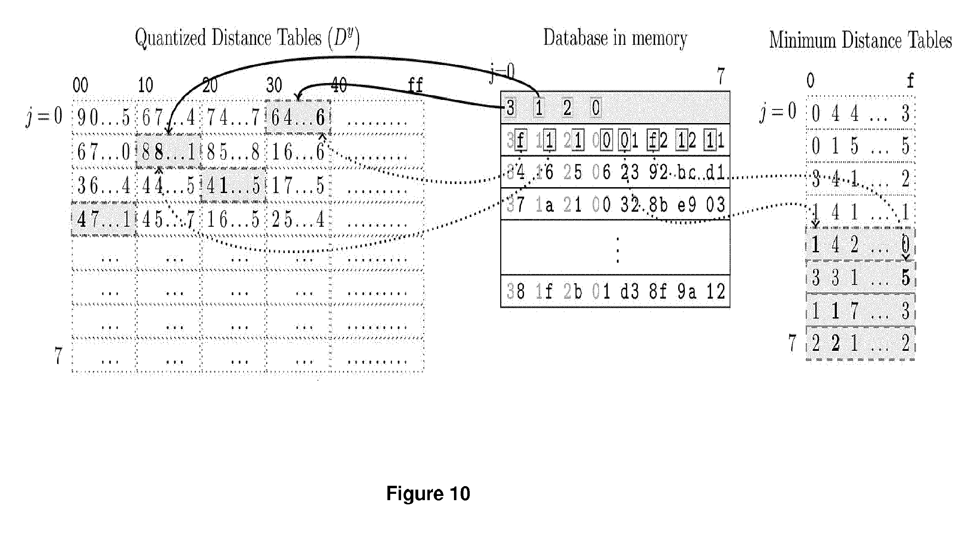

Figure 10 illustrates an exemplary database and distance calculation for an $8 \times 8$ PQ code according to the present principles, wherein all the items C2-C4 were implemented. Figure 10 relates to the examples depicted in Figures 3, 7 and 8. In addition to a quantized distance table, Figure 10 illustrates a database with a partial re-arrangement/indexing of vectors for the first 4 sub-quantizer components and lower bounding with minimum groups for the last 4 sub-quantizer components. Observe that the database vector depicted belongs to the index group 3120$h$, which corresponds to the 30 - $3fh$ columns of the first row ($j = 0$) of the distance table, 10 - 1$fh$ columns of the second row, 20 - $2fh$ columns of the 3rd row and 00 - 0$fh$ columns of the 4th row. Therefore, for the 1st component of the database vector of value $3fh$, the distance value is 6. The minimum distance table has 8 rows corresponding to the 8 sub-quantizers and 16 columns, each column of each row representing 16 elements of the distance table. For the last 4 components of the database vector, the minimum distance table (lower bound) is addressed, instead of the distance table (exact distances). The minimum distance table was computed for all sub-quantizer and has a minimum table for each sub-quantizer. The address to the minimum distance table takes in consideration the database vector component number ($j$ sub-quantizer) and the value of the component. Hence, the 6th component of the database vector ($j = 5$) addresses the 6th row of the minimum distance table (the 6th minimum table) and its value of $f2h$ addresses column $fh$ of the 6th minimum table, since the minimum grouping utilized the 4 MSB's ($b_{small} = 4$). The minimum distance value for this address is 5.

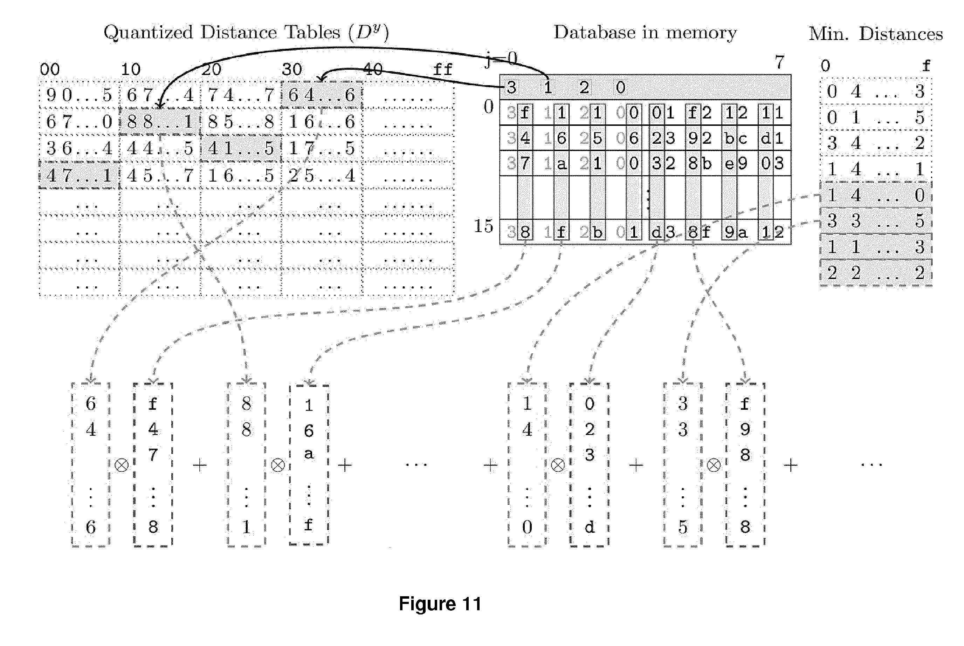

Figure 11 illustrates an exemplary database and distance calculation for an $8 \times 8$ PQ code according to the present principles, wherein all the items C2-C4 were implemented. It is an extension of Figure 10 further illustrating the parallelism of a register implementation (*e.g.,* SIMD), where each register has 16 bytes. The registers contain portions of the distance table, the minimum distance table and the database. Therefore, the distance components of 16 database vectors are simultaneously addressed and their total distances simultaneously calculated by utilizing index grouping on the 4 first sub-quantizers and minimum grouping on the last 4 sub-quantizers. By balancing index and minimum grouping, a fast implementation based on register memory for both types of grouping can be accomplished without impact on the accuracy of the search/scan. By increasing the number of sub-equalizers which are index grouped, the groups become smaller and the scan slows down since more segments of the distance table need to be addressed. By increasing the number of sub-equalizers which are minimum grouped, more candidates are chosen which also slows down the scan if their exact distances must be computed in the end.

In one embodiment of the present principles, the index grouping performed is used to store a list of "groups" of vectors rather than just a list of vectors (as in Figures 6 and 8). By storing groups, the group size is explicitly available, allowing one to not store the corresponding group bits of the components ($b_{group}$), which are already explicitly stored. This allows savings in memory by reducing the storage space needed. It can also provide an advantage with respect to computation performance as a complete group can be skipped if it can be determined that it cannot contain a vector whose distance to the query vector is smaller than the minimum found so far. For example, by looking at all possible values in the distance table segment corresponding to these 4 MSB's per sub-quantizer, it is possible to find a lower bound for the group (i.e., the lowest possible value for any vector in the group). If this value is bigger than the best minimum found so far, it is possible to skip the entire group (*i.e.,* perform no computation for vectors in this group).

In one embodiment of the present principles, distance tables are normalized such that the minimum distance value per sub-quantizer in all tables is zero, as such optimization positively impacts the early halting procedure.

As aforementioned, the advantages of the present principles include lower processing cost and faster answer to queries. The present principles are tailored for large to very large databases and work well for databases comprising over 10 million vectors. Also, as the database is re-organized to form index groups of vectors whose first symbols/components are such that the 5 high-order bits of each 16 bit ($2 \times 8$ bit) symbols are identical (32 groups of 2048 elements), it is possible to only store the 11 low-order bits of these first symbols. For an $8 \times 8$ code and a database of 16 million elements, this amount to 25% savings in memory cost (since no compression can be expected for the last 16 bits).

The size of the index group may be changed (made larger) so that compression may be more efficient and aligned to a multiple of 8 bits for easier access. For example 16 groups ($b_{group} = 4$ bits) of 4096 elements/centroids (12 bits), instead 32 groups ($b_{group} = 5$ bits) of 2048 elements/centroids (11 bits) for a $4 \times 16$ PQ code. However, this represents a trade-off between speed performance (in the form of the locality of memory accesses) and a decrease in storage cost.

An implementation of the present principles was performed in C++ using intrinsics to access SIMD instructions. (Common compilers offer functions named intrinsics available from C or C++ that cause one or more SIMD instructions to be emitted.) The implementation uses SIMD instructions from the SSSE3, SSE3 and SSE2 instruction sets, being therefore compatible with Intel processors released after 2007 (from the Core architecture), and AMD processors released after 2011 (from the Bulldozer architecture). The implementation was compared with the implementation of the libpq product quantization library. Libpq was developed by the authors of the seminal paper on product quantization for nearest neighbor search. The implementations were performed on a single core. The performance for both implementations was evaluated on 8 databases of varying sizes, each with a corresponding query set, as shown on Table 4. All databases were extracted from the ANN SIFT1 B dataset.

Both implementations were shown to have the same accuracy. However, the implementation according to the present principles had a much faster response (e.g., for 25 million vectors, the search time is reduced from 74ms to 15ms), proving it to be an advantageous solution. The implementations were compared over a wide range of systems, from laptops to servers, using processors released from 2009 to 2014. On all these systems, the median speed of the implementation according to the present principles is faster by a factor of 5-6 times. The results prove that the present principles propose an advantageous solution which is much faster than the prior art while maintaining the accuracy and also lends itself naturally to a hardware implementation using small registers.

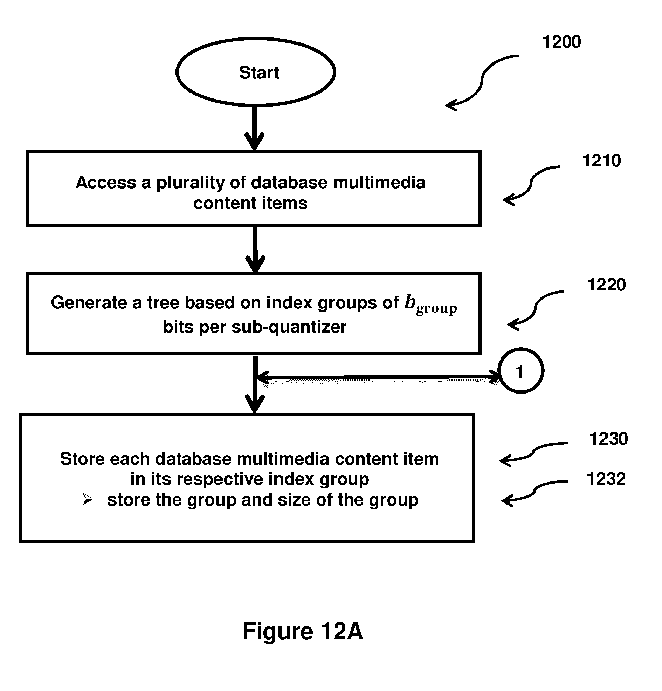

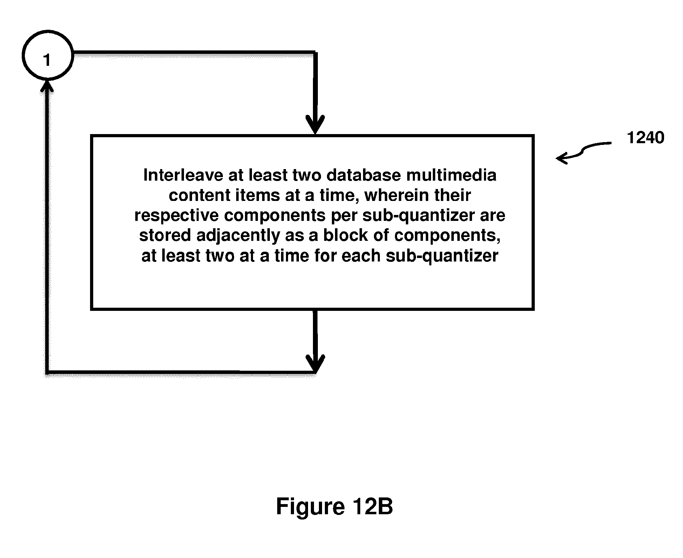

Figure 12 (A and B) illustrates a flowchart 1200 of a method of indexing multimedia content according to the present principles including: accessing 1210 a multimedia content database comprising a plurality of database multimedia content items , wherein a multimedia content item (hereby also called vectors, descriptors or descriptor vectors) is represented based on a $m \times b$ Product Quantization (PQ) code; generating 1220 a tree structure based on index groups, each group represented by at least one bit ($b_{group}$) from each index-grouped sub-quantizer, for less than all sub-quantizers; and storing 1230 in memory each database multimedia content item in its respective index group. The tree depth is the number of index-grouped sub-quantizers. The step of storing may further store the index group and size of the index group in memory 1232. The method may further include: interleaving (1240) at least two database multimedia content items at a time prior to storing, wherein their respective components per sub-quantizer are stored adjacently as a block of components, at least two at a time for each sub-quantizer.

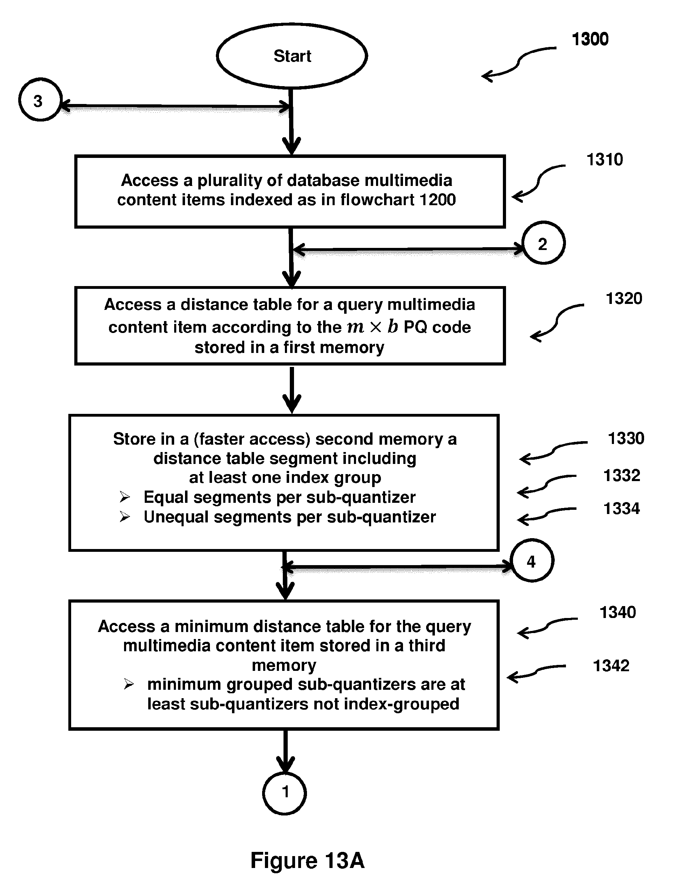

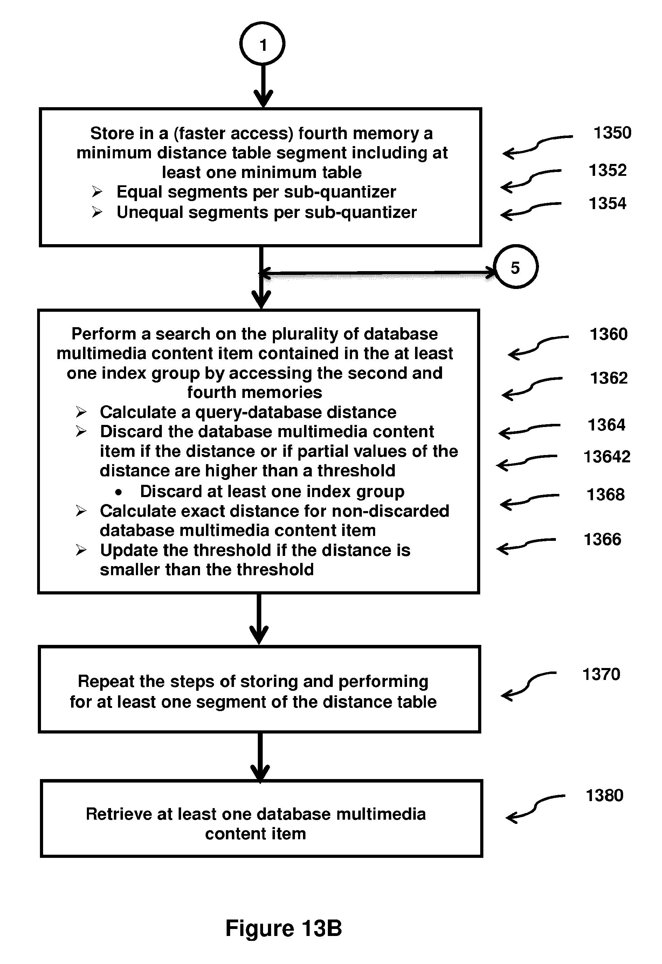

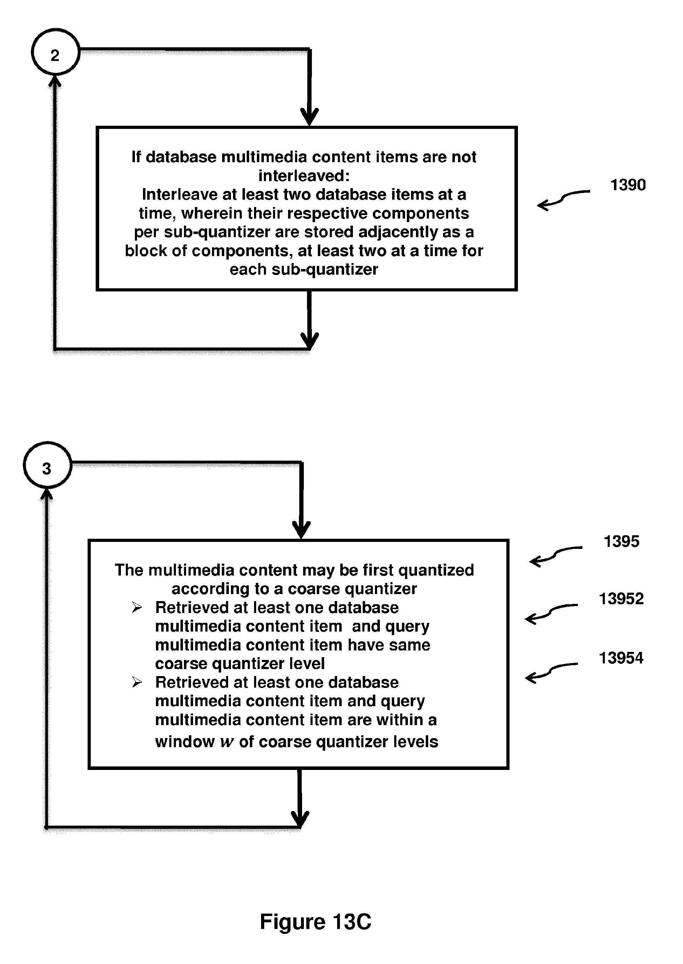

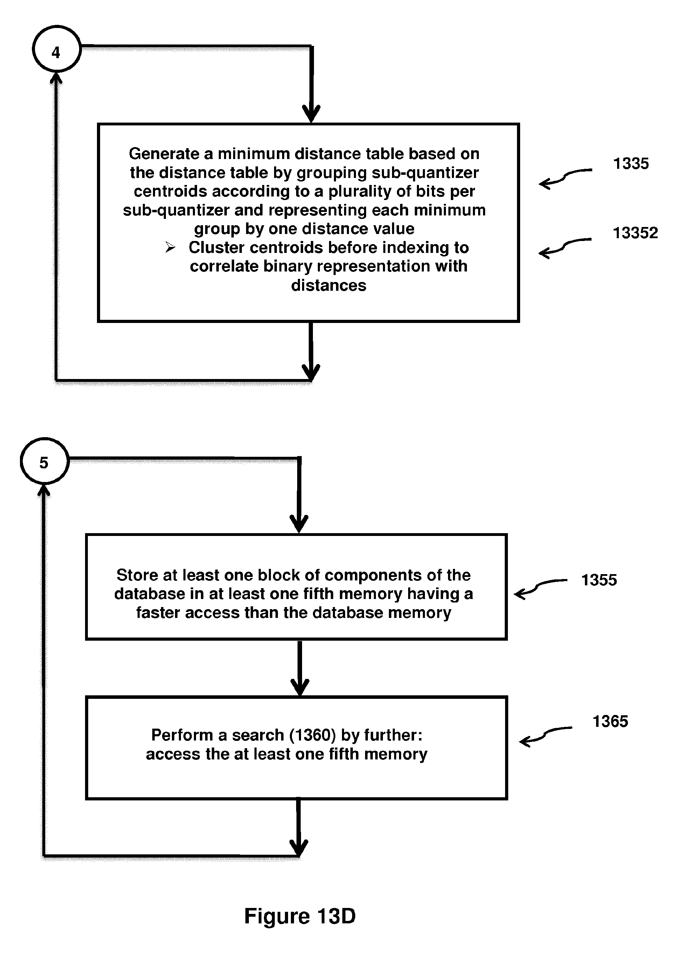

Figure 13 (A, B, C and D) illustrates a flowchart 1300 of a method of multimedia content retrieval according to the present principles including: accessing 1310 a multimedia content database comprising a plurality of database multimedia content items (or vectors), wherein a multimedia content item is represented based on a $m \times b$ Product Quantization (PQ) code and the database multimedia content items are indexed according to the method of flowchart 1200; accessing 1320 a distance table for a query multimedia content item (or vector) represented according to the $m \times b$ PQ code, wherein the distance table is stored in at least one first memory and contains a plurality of distances between the query multimedia content item components and $b$-bit represented centroids of the respective sub-quantizers; storing 1330 in at least one second memory a distance table segment including at least one index group, wherein the at least one second memory permits a faster access than the at least one first memory; accessing 1340 a minimum distance table for the query multimedia content item stored in at least one third memory, wherein the minimum distance table includes a plurality of minimum tables, one per minimum grouped sub-quantizer, the minimum table containing one distance for each minimum group of a sub-quantizer, each minimum group per sub-quantizer grouping centroids of the sub-quantizer according to a plurality of bits; storing 1350 in at least one fourth memory at least one minimum distance table segment including at least one minimum table, wherein the at least one fourth memory permits a faster access than the at least one third memory; performing 1360 a search between the query multimedia content item and the plurality of database multimedia content items contained in the at least one index group by accessing the distance table segment in the at least one second memory and the at least one fourth memory; and retrieving 1380 at least one database multimedia content item, wherein the at least one database multimedia content item is the closest at least one database multimedia content item from the query multimedia content item. The second and fourth memory can be cache, register or similar. The first and third memory can be cache, RAM, flash or similar. The minimum grouped sub-quantizers may be at least sub-quantizers not index-grouped 1342 and the one distance is a minimum distance among the distances within a minimum group. The method may further include: repeating 1370 the steps of storing 1330, 1350, and performing 1360 for at least one segment of the distance table and at least one segment of the minimum distance table. The method may further include: generating (1335) a minimum distance table based on the distance table by grouping sub-quantizer centroids according to a plurality of bits per sub-quantizer and representing each minimum group by one distance value, wherein the distances for all the minimum groups of a sub-quantizer constitute a minimum table. The sub-quantizer centroids may be clustered (13352) before indexed in order to correlate their binary representation with their respective distances.

The steps of storing 1330, 1350 may store equal sub-segments 1332, 1352 per sub-quantizer of a distance table/minimum distance table segment in the at least one second/fourth memory. Or it may store unequal sub-segments 1334, 1352 for each sub-quantizer in the at least one second/fourth memory, wherein at least one sub-quantizer sub-segment is larger than another sub-quantizer sub-segment.

If the database multimedia content items are not interleaved, the method may further include: interleaving (1390) at least two database multimedia content items at a time prior to storing, wherein their respective components per sub-quantizer are stored adjacently as a block of components, at least two at a time for each sub-quantizer.

The method may further include: storing (1355) at least one block of components of the database in at least one fifth memory having a faster access than the database memory; and perform the search (1360) by further: accessing (1365) the at least one fifth memory. The at least one second, fourth and fifth memories may be registers, as in Figure 11.

The step of performing a search 1360 may further include: calculating 1362 a query-database distance between a query multimedia content item and a database multimedia content item based on the distance table and minimum distance table segments, wherein the query-database distance is a sum of the distances or squared distances taken from the distance table or minimum distance table segments for each dimension of the database multimedia content item; discarding 1364 the database multimedia content item if the query-database distance or if partial values of the distance during the calculating step are higher than a threshold, wherein the threshold is a smallest distance among previously calculated query-database distances; and updating 1346 the threshold if the query-database distance is smaller than the threshold. The step of discarding may further include: discarding at least one index group 13642 if no database multimedia content item in the at least one index group may have a distance to the query multimedia content item smaller than the threshold. The step of performing a search 1360 may further include: If said database multimedia content item is not discarded, calculating 1368 an exact distance between the database multimedia content item and the query multimedia content item based only on the distance table, prior to the step of updating.

The multimedia content may be quantized according to a coarse quantizer 1395 and *m* residual quantizers and is stored in accordance with an inverted file architecture. The retrieved at least one database multimedia content item may have the same coarse quantizer level as the query multimedia content item 13952. Or the retrieved at least one database multimedia content item may have a coarse quantizer level within a window w 13954 from the coarse quantizer level of the query multimedia content item, wherein the window contains a plurality of coarse quantizer levels.

It is to be understood that the techniques of the present principles may be applied to general search algorithms that rely heavily on lookup into pre-computed tables. In particular, they can be applied to variants and extensions of PQ codes and to compressed or uncompressed multimedia content. In addition, it is to be understood that the present principles may be implemented in various forms of hardware, software, firmware, special purpose processors, or a combination thereof. Preferably, the present principles are implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), at least one memory (*e.g.,* cache memory, register memory, random access memory (RAM), read-only memory (ROM), flash memory, etc.), and/or storage devices (HDD), and at least one input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

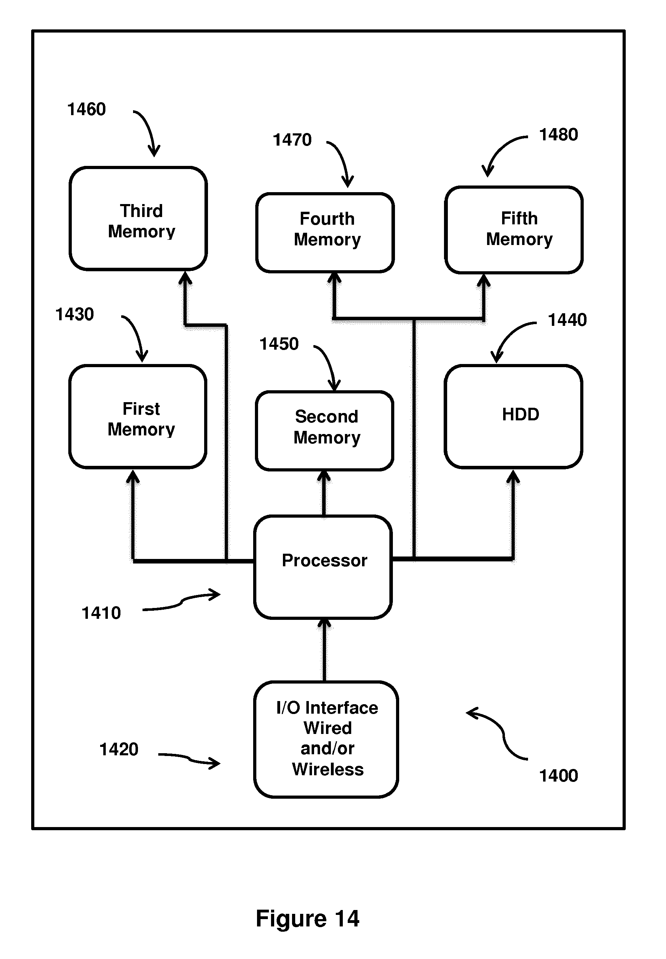

Figure 14 shows a block diagram of a minimum computing environment 1400 within which the present principles can be implemented and executed. The computing environment 1400 includes a processor 1410, and at least one (and preferably more than one) I/O interface 1420. The I/O interface can be wired or wireless and, in the wireless implementation is pre-configured with the appropriate wireless communication protocols to allow the computing environment 1400 to operate on a global network (*e.g.,* internet) and communicate with other computers or servers (*e.g.,* cloud based computing or storage servers) so as to enable the present principles to be provided, for example, as a Software as a Service (SAAS) feature remotely provided to end users. At least one first 1430 and at least one third 1460 memories (*e.g.,* cache memory, random access memory, read-only memory, flash, etc.), at least one second 1450, at least one fourth 1470 and at least one fifth 1480 memories (*e.g.,* cache memory, register memory, etc.), and/or storage devices (HDD) 1440 are also provided within the computing environment 1400. The computing environment can be used to implement a node or device, and/or a controller or server who operates the storage system. The at least one second memory 1450 permits faster access from the processor than the at least one first memory 1430 or storage devices 1440. The at least one fourth memory 1470 permits faster access from the processor than the at least one third memory 1460 or storage devices 1440. The at least one fifth memory 1480 permits faster access from the processor than the database memory (not shown in the figure, *e.g.,* cache memory, random access memory, read-only memory, flash, storage devices, etc.). The at least one second memory 1450, fourth memory 1470 and fifth memory 1480 can be a register or cache memory. In addition, the at least first, second, third, fourth and fifth memories, and storage devices may not be co-located with the processor, and can be part of a distributed network system.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles is not limited to those precise embodiments, and that various changes and modifications may be effected therein by one of ordinary skill in the pertinent art without departing from the scope of the present principles. All such changes and modifications are intended to be included within the scope of the present principles as set forth in the appended claims.

**Claims**

1. A method of indexing multimedia content for the purpose of retrieval, said method comprising:

   accessing (1210) a multimedia content database comprising a plurality of database multimedia content items represented according to a $m \times b$ Product Quantization (PQ) code;
   generating (1220) a tree structure of index groups, each group represented by at least one bit per index-grouped sub-quantizer, for less than all sub-quantizers; and
   storing (1230) in memory each database multimedia content item in its respective index group.

2. The method of claim 1 further comprising:

   interleaving (1240) at least two database multimedia content items at a time prior to storing, wherein their respective components per sub-quantizer are stored adjacently as a block of components, at least two at a time for each sub-quantizer.

3. A method of multimedia content retrieval comprising:

   accessing (1310) a multimedia content database comprising a plurality of database multimedia content items represented according to a $m \times b$ Product Quantization (PQ) code and indexed according to the method of claims 1 or 2;
   accessing (1320) a distance table for a query multimedia content item represented according to said $m \times b$ PQ code, wherein said distance table is stored in at least one first memory;
   storing (1330) in at least one second memory a distance table segment comprising at least one index group, wherein said at least one second memory permits a faster access than said at least one first memory;
   accessing (1340) a minimum distance table for said query multimedia content item stored in at least one third memory, wherein said minimum distance table comprises a plurality of minimum tables, one per minimum grouped sub-quantizer, said minimum table containing one distance for each minimum group of a sub-quantizer, each minimum group per sub-quantizer grouping centroids of said sub-quantizer according to a plurality of bits;
   storing (1350) in at least one fourth memory at least one minimum distance table segment comprising at least one minimum table, wherein said at least one fourth memory permits a faster access than said at least one third memory;
   performing (1360) a search between said query multimedia content item and said plurality of database multimedia content items contained in said at least one index group by accessing said at least one second memory and said at least one fourth memory; and
   retrieving (1380) at least one database multimedia content item, wherein said at least one database multimedia content item is the closest at least one database multimedia content item from said query multimedia content item.

4. The method of claim 3, further comprising:

   repeating (1370) the steps of storing and performing for at least one segment of the distance table and at least one segment of the minimum distance table; and

5. The method according to claim 3 or 4, further comprising:

   generating (1335) a minimum distance table based on said distance table by grouping sub-quantizer centroids according to a plurality of bits per sub-quantizer and representing each minimum group by one distance value, wherein the distances for all the minimum groups of a sub-quantizer constitute a minimum table.

6. The method according to any of the claims 3-5, wherein said sub-quantizer centroids are clustered (13352) before indexed in order to correlate their binary representation with their respective distances.

7. The method according to any of the claims 3-6, wherein said minimum grouped sub-quantizers are at least sub-quantizers not index-grouped (1342) and said one distance is a minimum distance among the distances within a minimum group.

8. The method according to any of the claims 3-7, wherein the database vectors are not interleaved, said method further comprising:

interleaving (1390) at least two database multimedia content items at a time prior to storing, wherein their respective components per sub-quantizer are stored adjacently as a block of components, at least two at a time for each sub-quantizer.

9. The method according to any of the claims 3-8, further comprising:

storing (1355) at least one block of components of said database in at least one fifth memory having a faster access than said database memory; and
said search is performed (1360) by further:

accessing (1365) said at least one fifth memory.

10. The method according to claim 9, wherein said at least one second, fourth and fifth memories are registers.

11. The method according to any of the claims 3-10, wherein the step of performing a search (1360) further comprises:

calculating (1362) a query-database distance between a query multimedia content item and a database multimedia content item based on said distance table and minimum distance table segments;
discarding (1364) said database multimedia content item if said query-database distance or if partial values of said distance during said calculating step are higher than a threshold; and
updating (1366) said threshold if said query-database distance is smaller than said threshold.

12. The method according to claim 11, wherein the step of discarding (1364) may further include:

discarding (13642) at least one index group if no database multimedia content item in said at least one index group may have a distance to the query multimedia content item smaller than the threshold.

13. The method according to claim 11 or 12, further comprising:

If said database multimedia content item is not discarded, calculating (1368) an exact distance between said database multimedia content item and said query multimedia content item based only on the distance table, prior to the step of updating.

14. An apparatus for indexing multimedia content for the purpose of retrieval, said apparatus 1400 comprising a processor 1410, for receiving at least one input/output 1420; and at least one memory 1430 in signal communication with said processor, said apparatus being configured to implement the method according to any of the claims 1-2.

15. An apparatus for multimedia content retrieval, said apparatus (1400) comprising a processor (1410), for receiving at least one input/output (1420); at least one first memory (1430), at least one second memory (1450), at least one third memory (1460) and at least one fourth memory (1470) in signal communication with said processor, said apparatus being configured to implement the method according to any of the claims 3-12.

**Figure 1**

Figure 2

Figure 3

```
┌─────────┐   ┌─────────┐   ┌─────────┐   ┌─────────┐
│  Core   │   │  Core   │   │  Core   │   │  Core   │
└────┬────┘   └────┬────┘   └────┬────┘   └────┬────┘
     │ 5 cycles    │             │             │
     ▼             ▼             ▼             ▼
┌─────────┐   ┌─────────┐   ┌─────────┐   ┌─────────┐
│ L1 Cache│   │ L1 Cache│   │ L1 Cache│   │ L1 Cache│
│ (32 KB) │   │ (32 KB) │   │ (32 KB) │   │ (32 KB) │
└────┬────┘   └────┬────┘   └────┬────┘   └────┬────┘
     │ +7 cycles   │             │             │
     ▼             ▼             ▼             ▼
┌─────────┐   ┌─────────┐   ┌─────────┐   ┌─────────┐
│ L2 Cache│   │ L2 Cache│   │ L2 Cache│   │ L2 Cache│
│ (256 KB)│   │ (256 KB)│   │ (256 KB)│   │ (256 KB)│
└────┬────┘   └────┬────┘   └────┬────┘   └────┬────┘
     │ +24 cycles  │             │             │
     ▼             ▼             ▼             ▼
┌────────────────────────────────────────────────────┐
│                    L3 Cache                         │
│                  (2.5 - 40 MB)                      │
└────────────────────────┬───────────────────────────┘
                         │ +120 cycles
                         ▼
┌────────────────────────────────────────────────────┐
│                  Main Memory                        │
│                (8 GB – 768 GB)                      │
└────────────────────────────────────────────────────┘
```

# Figure 4

| | | | |
|------|------|------|------|
| 0002 | 0004 | 0005 | 0000 |
| 0003 | 0005 | 0109 | 0808 |
| 0102 | 0004 | 0397 | 09af |
| f21a | 0001 | 08bc | 08d6 |
| f21a | 0101 | 08bc | 08d6 |
| 0e52 | 00e2 | 08e7 | f8af |
| 0103 | 0525 | 0509 | f808 |
| 3b93 | 00d5 | 081c | f808 |
| 1022 | 0004 | 089e | 08af |
| d1da | 1331 | 08bc | f8d6 |
| 3b93 | 0ad5 | 081c | f808 |
| 00da | 0031 | 08bc | f8d6 |
| d1da | ed31 | 08bc | f8d6 |
| 0702 | 0604 | 0097 | fdaf |
| 0033 | 0005 | 08d9 | 0808 |
| 0052 | 00e2 | 08e7 | f8af |
| 0e52 | fee2 | 08e7 | f8af |
| 0113 | 0805 | 0297 | 02af |
| 001a | 0001 | 08bc | 0fd6 |
| 034a | 0201 | 03bc | 01d6 |
| 001a | 0041 | 08bc | 07d6 |
| 1022 | f004 | 089e | 08af |
| 0043 | 0095 | 0809 | 0008 |

⋮
⋮

**Figure 5**

**Figure 6**

| 01 | 03 | 02 | 05 | 06 | 09 | 04 | 08 |
| 3f | 11 | 21 | 00 | 01 | f2 | 12 | 11 |
| 04 | 0c | 0e | 1a | f1 | 0f | a9 | 17 |
| f6 | ff | f6 | f0 | 23 | 0b | b6 | 2f |
| 37 | 1a | 21 | 00 | 32 | 8b | e9 | 03 |
| f5 | fc | ff | f1 | 46 | 33 | cf | 2c |
| f4 | ff | fb | fb | 52 | ef | 42 | bd |
| 08 | 0a | 0b | 01 | 3d | bc | 82 | d6 |
| 0e | 06 | 02 | 19 | b0 | 8e | c9 | 13 |
| 01 | 02 | 08 | 04 | a1 | 97 | 6d | af |
| 34 | 16 | 25 | 06 | 23 | 92 | bc | d1 |
| 0d | 07 | 02 | 17 | 69 | 57 | 45 | 13 |

⋮

**Figure 7**

| 0 | 0 | 0 | 0 | | | | |
|----|----|----|----|----|----|----|----|
| 01 | 03 | 02 | 05 | 06 | 09 | 04 | 08 |
| 01 | 02 | 08 | 04 | a1 | 97 | 6d | af |
| 08 | 0a | 0b | 01 | 3d | bc | 82 | d6 |
| | | | $\vdots$ | | | | |
| 0 | 0 | 0 | 1 | | | | |
| 0d | 07 | 02 | 17 | 69 | 57 | 45 | 13 |
| 0e | 06 | 02 | 19 | b0 | 8e | c9 | 13 |
| 04 | 0c | 0e | 1a | f1 | 0f | a9 | 17 |
| | | | $\vdots$ | | | | |
| 3 | 1 | 2 | 0 | | | | |
| 33 | 12 | 22 | 03 | 31 | 02 | 12 | 11 |
| 34 | 16 | 25 | 06 | 23 | 92 | bc | d1 |
| 37 | 1a | 21 | 00 | 32 | 8b | e9 | 03 |
| | | | $\vdots$ | | | | |
| f | f | f | f | | | | |
| f5 | fc | ff | f1 | 46 | 33 | cf | 2c |
| f6 | ff | f6 | f0 | 23 | 0b | b6 | 2f |
| f4 | ff | fb | fb | 52 | ef | 42 | bd |
| | | | $\vdots$ | | | | |

$p_{3h} = 0$

$p_{2h} = 0$

$p_{3h} = 1 \qquad p_{1h} = 0$

$p_{2h} = 1 \qquad p_{0h} = 0$

## Figure 8

**Figure 9**

Figure 10

EP 3 115 909 A1

Quantized Distance Tables ($D^y$)    Database in memory    Min. Distances

**Figure 11**

**Figure 12A**

1

Interleave at least two database multimedia content items at a time, wherein their respective components per sub-quantizer are stored adjacently as a block of components, at least two at a time for each sub-quantizer

1240

Figure 12B

**Figure 13A**

**1**

Store in a (faster access) fourth memory a minimum distance table segment including at least one minimum table
➤ Equal segments per sub-quantizer
➤ Unequal segments per sub-quantizer

1350
1352
1354

**5**

Perform a search on the plurality of database multimedia content item contained in the at least one index group by accessing the second and fourth memories
➤ Calculate a query-database distance
➤ Discard the database multimedia content item if the distance or if partial values of the distance are higher than a threshold
  • Discard at least one index group
➤ Calculate exact distance for non-discarded database multimedia content item
➤ Update the threshold if the distance is smaller than the threshold

1360
1362
1364
13642
1368
1366

Repeat the steps of storing and performing for at least one segment of the distance table

1370

Retrieve at least one database multimedia content item

1380

**Figure 13B**

**2**

If database multimedia content items are not interleaved:
Interleave at least two database items at a time, wherein their respective components per sub-quantizer are stored adjacently as a block of components, at least two at a time for each sub-quantizer

1390

**3**

The multimedia content may be first quantized according to a coarse quantizer
➢ Retrieved at least one database multimedia content item and query multimedia content item have same coarse quantizer level
➢ Retrieved at least one database multimedia content item and query multimedia content item are within a window $w$ of coarse quantizer levels

1395

13952

13954

Figure 13C

Generate a minimum distance table based on the distance table by grouping sub-quantizer centroids according to a plurality of bits per sub-quantizer and representing each minimum group by one distance value
➢ Cluster centroids before indexing to correlate binary representation with distances

1335

13352

Store at least one block of components of the database in at least one fifth memory having a faster access than the database memory

1355

Perform a search (1360) by further: access the at least one fifth memory

1365

**Figure 13D**

1460

Third
Memory

1470

Fourth
Memory

1480

Fifth
Memory

1430

First
Memory

1450

Second
Memory

1440

HDD

Processor

1410

1420

I/O Interface
Wired
and/or
Wireless

1400

Figure 14

Europäisches
Patentamt

European
Patent Office

Office européen
des brevets

# EUROPEAN SEARCH REPORT

**Application Number**

EP 15 30 6125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | H JÉGOU ET AL: "Product Quantization for Nearest Neighbor Search", IEEE TRANSACTIONS ON PATTERN ANALYSIS AND MACHINE INTELLIGENCE, vol. 33, no. 1, 1 January 2011 (2011-01-01), pages 117-128, XP055026005, ISSN: 0162-8828, DOI: 10.1109/TPAMI.2010.57 * the whole document * | 1-15 | INV. G06F17/30 |
| X | FAYEZ M IDRIS ET AL: "Spatio-Temporal Indexing of Vector Quantized Video Sequences", IEEE TRANSACTIONS ON CIRCUITS AND SYSTEMS FOR VIDEO TECHNOLOGY, IEEE SERVICE CENTER, PISCATAWAY, NJ, US, vol. 7, no. 5, 1 October 1997 (1997-10-01), XP011014419, ISSN: 1051-8215 * page 1 - page 11 * | 1-15 | |

**TECHNICAL FIELDS SEARCHED (IPC)**

G06F

The present search report has been drawn up for all claims

| Place of search | Date of completion of the search | Examiner |
|---|---|---|
| Munich | 11 November 2015 | Korkuzas, Valdas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. JEGÓU ; M. DOUZE ; C. SCHMID.** Product Quantization for Nearest Neighbor Search. *IEEE Transactions on Pattern Analysis and Machine Intelligence,* 2011, vol. 33 (1), 117-128